# EUROPÄISCHE PATENTSCHRIFT

(11) **EP 3 368 636 B1**
(45) Veröffentlichungstag und Bekanntmachung des Hinweises auf die Patenterteilung: **29.04.2020**
(21) Anmeldenummer: 16777532.9
(22) Anmeldetag: 05.10.2016
(51) Int. Cl.: C09K 19/04, C09K 19/12, C09K 19/30, C09K 19/34, F21V 11/00, G02F 1/13, G02F 1/137

(54) **FLÜSSIGKRISTALLINES MEDIUM**
LIQUID CRYSTALLINE MEDIUM
MILIEU CRISTALLIN LIQUIDE

(30) Priorität: 27.10.2015 DE 102015013822
(43) Veröffentlichungstag der Anmeldung: 05.09.2018
(73) Patentinhaber: Merck Patent GmbH, 64293 Darmstadt (DE)
(72) Erfinder: WITTEK, Michael, 64390 Erzhausen (DE); KLASS, Dagmar, 64291 Darmstadt (DE)
(86) Internationale Anmeldenummer: PCT/EP2016/001647
(87) Internationale Veröffentlichungsnummer: WO 2017/071790

(56) Entgegenhaltungen:
- WO-A1-2009/089898
- CN-B- 102 929 021
- JP-A- 2006 147 377
- US-A1- 2007 170 395
- US-A1- 2009 101 869

## Beschreibung

Die vorliegende Erfindung betrifft ein flüssigkristallines Medium sowie dessen Verwendung für elektrooptische Zwecke, insbesondere für Flüssigkristallichtventile für den Einsatz in Beleuchtungseinrichtungen für Kraftfahrzeuge, dieses Medium enthaltende Flüssigkristallichtventile und auf solchen Flüssigkristallichtventilen basierende Beleuchtungseinrichtungen.

Flüssigkristalle werden vor allem als Dielektrika in Anzeigevorrichtungen verwendet, da die optischen Eigenschaften solcher Substanzen durch eine angelegte Spannung beeinflußt werden können. Elektrooptische Vorrichtungen auf der Basis von Flüssigkristallen sind dem Fachmann bestens erkannt und können auf verschiedenen Effekten beruhen. Derartige Vorrichtungen sind beispielsweise TN-Zellen mit verdrillt nematischer ("twisted nematic") Struktur oder STN-Zellen ("super-twisted nematic"). Moderne TN- und STN-Displays basieren auf einer aktiven Matrix von individuell adressierbaren Flüssigkristallichtventilen (den Bildpunkten) mit integrierten roten, grünen und blauen Farbfiltern zur additiven Erzeugung der Farbbilder.

Die in Flüssigkristallanzeigen ausgenutzten elektrooptischen Effekte finden in neuerer Zeit auch für andere Anwendungen Verwendung, z.B. in den in CN 102929021 B beschriebenen Schweißerschutzmasken.
In der DE 19910004 A1 werden LCD-Bildschirme als Blende zur beliebigen Ausgestaltung der Helligkeitsverteilung von Beleuchtungseinrichtungen für Kraftfahrzeuge beschrieben, wodurch die Helligkeitsverteilung flexibel an die Fahrsituation angepaßt werden soll. Ein ähnliches System basierend auf Flüssigkristall-Linsen wird in JP2006147377 A2 vorgeschlagen.

Solche adaptiven Beleuchtungseinrichtungen für Kraftfahrzeuge (engl.: adaptive front lighting system, AFS) erzeugen ein an die jeweilige Situation und die Umweltbedingungen angepaßtes Scheinwerferlicht und sind in der Lage beispielsweise auf die Licht- und Wetterverhältnisse, die Fahrzeugbewegung oder das Vorhandensein anderer Verkehrsteilnehmer zu reagieren, um die Umgebung konstant und optimal auszuleuchten und andere Verkehrsteilnehmer nicht zu stören. In der US 4,985,816 sind beispielsweise Bauteile offengelegt, in denen ein räumlicher Lichtmodulator in der Form einer Flüssigkristall-(LCD)anzeigeplatte bestehend aus einem Raster von lichtdurchlässigen Elementen, analog den Bildpunkten einer Flüssigkristallanzeige, eine elektrisch schaltbare, vollständige oder partielle Abschattung des Lichtkegels erzeugt mit dem Ziel, die Fahrer entgegenkommender Fahrzeuge nicht oder weniger zu blenden. Solche räumlichen Lichtmodulatoren werden wie bereits erwähnt auch als Flüssigkristallichtventile bezeichnet. Aufgrund der ähnlichen Funktionsweise wie bei Projektoren spricht man auch von Fahrzeugbeleuchtungen vom Projektor-Typ. Die Bildinformation zur kontrollierten Abschattung des Lichtkegels liefert dabei bevorzugt eine Digitalkamera.

Ein Flüssigkristallichtventil im Sinne der vorliegenden Erfindung kann eine einzige Fläche zur Modulierung des Lichts umfassen oder ein Raster (Matrix) einer Vielzahl gleicher oder verschiedener Teilflächen entsprechend den Bildpunkten (engl. "Pixel") einer Flüssigkristallanzeige. Ein Raster von Flüssigkristallichtventilen stellt somit einen Spezialfall einer einfarbigen Matrix-Flüssigkristallanzeige dar oder kann als Teil einer solchen betrachtet werden.
Eine Beleuchtungseinrichtung im Sinne der Erfindung ist insbesondere ein AFS bzw. Teil eines AFS. Eine Beleuchtungseinrichtung im Sinne der Erfindung dient insbesondere der Ausleuchtung eines Bereichs vor einem Fahrzeug bzw. Kraftfahrzeug.

Kraftfahrzeug im Sinne der Erfindung ist insbesondere ein individuell im Straßenverkehr benutzbares Landfahrzeug. Kraftfahrzeuge im Sinne der Erfindung sind insbesondere nicht auf Landfahrzeuge mit Verbrennungsmotor beschränkt.

In dem in der oben erwähnten US 4,985,816 offenbarten Flüssigkristallichtventil wird eine TN-Zelle als optisches Modulationselement verwendet, welches Bildelemente entsprechend dem gewünschten Helligkeitsprofil der Fahrzeugbeleuchtung darstellt, wobei beispielsweise eine Ansteuerspannung an den TN-Flüssigkristall zur Modulierung (Steuerung) des Transmissionsgrades eines Bildelementes angelegt wird. Wegen der dort erforderlichen Polarisatoren ist nur etwa die Hälfte des Lichtes der Lichtquelle nutzbar. Eine ebenfalls auf einer TN-Zelle basierende Alternative, die es ermöglicht, mehr als nur die Hälfte des Lichtes der Lichtquelle der Beleuchtungseinrichtung nutzbar zu machen ist in DE 10 2013 113 807 A1 offengelegt. Darin wird das Licht mittels eines polarisierenden Strahlteilers in zwei Teilstrahlen mit zueinander senkrechter Polarisationsebene geteilt und durch zwei separate, getrennt voneinander schaltbare Flüssigkristallelemente gelenkt.

Solche Beleuchtungseinrichtungen zeichnen sich durch vergleichsweise hohe Betriebstemperaturen von typischerweise 60-80°C aus, was besondere Anforderungen an die verwendeten Flüssigkristallmedien stellt: die Klärpunkte müssen höher als 120°C, bevorzugt höher als 140°C sein und wegen der starken Lichtbelastung müssen diese Medien eine besonders hohe Lichtstabiliät aufweisen. Dies kann u.U. beispielsweise durch Verwendung von Materialien mit möglichst geringer Doppelbrechung begünstigt werden. Die Flüssigkristallmaterialien müssen außerdem eine gute chemische und thermische Stabilität und eine gute Stabilität gegenüber elektrischen Feldern besitzen. Ferner sollten die Flüssigkristallmaterialien niedrige Viskosität aufweisen und in den Zellen relativ kurze Ansprechzeiten, möglichst tiefe Betriebsspannungen und einen hohen Kontrast ergeben.

Weiterhin sollten sie bei üblichen Betriebstemperaturen, d.h. in einem möglichst breiten Bereich unterhalb und oberhalb Raumtemperatur eine geeignete Mesophase besitzen, beispielsweise für die oben genannten Zellen eine nematische oder cholesterische Mesophase, vorzugsweise von -40°C bis 150°C. Da Flüssigkristalle in der Regel als Mischungen mehrerer Komponenten zur Anwendung gelangen, ist es wichtig, daß die Komponenten untereinander gut mischbar sind. Weitere Eigenschaften, wie die elektrische Leitfähigkeit, die dielektrische Anisotropie und die optische Anisotropie, müssen je nach Zellentyp und Anwendungsgebiet unterschiedlichen Anforderungen
genügen. Beispielsweise sollten Materialien für Zellen mit verdrillt nematischer Struktur eine positive dielektrische Anisotropie und eine geringe elektrische Leitfähigkeit aufweisen.

Beispielsweise sind für Lichtventile in Matrix-Flüssigkristallanzeigen mit integrierten nicht-linearen Elementen zur Schaltung einzelner Bildpunkte (MFK-Anzeigen) Medien mit großer positiver dielektrischer Anisotropie, breiten nematischen Phasen, relative niedriger Doppelbrechung, sehr hohem spezifischen Widerstand, guter Licht- und Temperaturstabilität und geringerem Dampfdruck erwünscht. Derartige Matrix-Flüssigkristallanzeigen sind bekannt und das bauartliche Prinzip kann auch für die erfindungsgemäße Beleuchtungseinrichtung verwendet werden.

Als nichtlineare Elemente zur individuellen Schaltung der einzelnen Bildpunkte können beispielsweise aktive Elemente (d.h. Transistoren) verwendet werden. Man spricht dann von einer "aktiven Matrix", wobei man zwei Typen unterscheiden kann:
1. MOS (Metal Oxide Semiconductor) oder andere Dioden auf Silizium-Wafer als Substrat.
2. Dünnfilm-Transistoren (TFT) auf einer Glasplatte als Substrat.

Die Verwendung von einkristallinem Silizium als Substratmaterial beschränkt die Displaygröße, da auch die modulartige Zusammensetzung verschiedener Teildisplays an den Stößen zu Problemen führt.

Bei dem aussichtsreicheren Typ 2, welcher bevorzugt ist, wird als elektrooptischer Effekt üblicherweise der TN-Effekt verwendet. Man unterscheidet zwei Technologien: TFT's aus Verbindungshalbleitern wie z.B. CdSe oder TFT's auf der Basis von polykristallinem oder amorphem Silizium. An letzterer Technologie wird weltweit mit großer Intensität gearbeitet.

Die TFT-Matrix ist auf der Innenseite der einen Glasplatte der Anzeige aufgebracht, während die andere Glasplatte auf der Innenseite die transparente Gegenelektrode trägt. Im Vergleich zu der Größe der Bildpunkt-Elektrode ist der TFT sehr klein und stört das Bild praktisch nicht.

Die TFT-Anzeigen und entsprechende Lichtventile für Beleuchtungseinrichtungen arbeiten üblicherweise als TN-Zellen mit gekreuzten Polarisatoren in Transmission und sind von hinten beleuchtet.

Der Begriff MFK-Anzeigen umfaßt hier jedes Matrix-Display mit integrierten nichtlinearen Elementen, d.h. neben der aktiven Matrix auch Anzeigen mit passiven Elementen wie Varistoren oder Dioden (MIM = Metall-Isolator-Metall).

Neben Problemen hinsichtlich der Winkelabhängigkeit des Kontrastes und der Schaltzeiten resultieren bei MFK-Anzeigen Schwierigkeiten bedingt durch nicht ausreichend hohen spezifischen Widerstand der Flüssigkristallmischungen [TOGASHI, S., SEKOGUCHI, K., TANABE, H., YAMAMOTO, E., SORIMACHI, K., TAJIMA, E., WATANABE, H., SHIMIZU, H., Proc. Eurodisplay 84, Sept. 1984: A 210-288 Matrix LCD Controlled by Double Stage Diode Rings, p. 141 ff, Paris; STROMER, M., Proc. Eurodisplay 84, Sept. 1984: Design of Thin Film Transistors for Matrix Addressing of Television Liquid Crystal Displays, p. 145 ff, Paris]. Mit abnehmendem Widerstand verschlechtert sich der Kontrast einer MFK-Anzeige und es kann das Problem der "after image elimination" auftreten. Da der spezifische Widerstand der Flüssigkristallmischung durch Wechselwirkung mit den inneren Oberflächen der Anzeige im allgemeinen über die Lebenszeit einer MFK-Anzeige abnimmt, ist ein hoher (Anfangs)-Widerstand sehr wichtig, um akzeptable Standzeiten zu erhalten. Insbesondere bei low-volt-Mischungen war es bisher nicht möglich, sehr hohe spezifische Widerstände zu realisieren. Weiterhin ist es wichtig, daß der spezifische Widerstand eine möglichst geringe Zunahme bei steigender Temperatur sowie nach Temperatur- und/oder Licht-Belastung zeigt. Dies ist auch beim Einsatz von Lichtventilen in Beleuchtungseinrichtungen für Kraftfahrzeuge relevant, da der Flüssigkristall darin extremen Temperatur- und Lichtbelastungen ausgesetzt ist und ein geringer spezifischer Anfangswiderstand und eine schnelle Zunahme des spezifischen Widerstands bei Belastung in der Regel mit einer geringen Langzeitstabilität korreliert.

Besonders nachteilig sind auch die Tieftemperatureigenschaften der Mischungen aus dem Stand der Technik. Gefordert wird, daß auch bei tiefen Temperaturen keine Kristallisation und/oder smektische Phasen auftreten und die Temperaturabhängigkeit der Viskosität möglichst gering ist. Die MFK-Anzeigen aus dem Stand der Technik genügen somit nicht den Anforderungen für die Anwendung in Beleuchtungseinrichtungen.

Es besteht somit immer noch ein großer Bedarf nach Flüssigkristallmischungen mit sehr hohem spezifischen Widerstand bei gleichzeitig großem Arbeitstemperaturbereich und hoher Lichtstabilität.

Bei Flüssigkristallichtventilen für Beleuchtungseinrichtungen für Kraftfahrzeuge sind Medien erwünscht, die folgende Vorteile in den Zellen ermöglichen:
- erweiterter nematischer Phasenbereich (insbesondere zu hohen Temperaturen)
- lagerstabil, auch bei tiefen Temperaturen
- Schaltbarkeit bei tiefen Temperaturen
- erhöhte Beständigkeit gegenüber Licht.

Mit den aus dem Stand der Technik zur Verfügung stehenden Medien ist es nicht möglich, diese Vorteile unter gleichzeitigem Erhalt der übrigen Parameter zu realisieren. Beispielsweise weisen Flüssigkristallmedien der Offenlegungsschriften DE 102 23 061 A1, DE 10 2008 062858 A1, US 2007/170395 A1 und US 2009/101869 A1 ein niedriges Δn auf, allerdings liegen die Klärpunkte mit um die 80 °C in einem für die erfindungsgemäße Anwendung zu niedrigem Bereich.

Der Erfindung liegt die Aufgabe zugrunde, Medien, insbesondere für die oben erwähnten Flüssigkristallichtventile für Beleuchtungseinrichtungen für Kraftfahrzeuge bereitzustellen, die die oben angegebenen Nachteile nicht oder nur in geringerem Maße, und vorzugsweise gleichzeitig sehr hohe Klärpunkte und niedrige Doppelbrechung aufweisen.
Es wurde nun gefunden, daß diese Aufgabe gelöst werden kann, wenn man in Flüssigkristallbauteilen erfindungsgemäße Medien verwendet. Gegenstand der Erfindung ist somit ein flüssigkristallines Medium auf der Basis eines Gemisches von polaren Verbindungen mit positiver dielektrischer Anisotropie, dadurch gekennzeichnet, daß es
a) eine oder mehrere Verbindungen der Formel I in einer Gesamtkonzentration von ≥40 Gew.-% 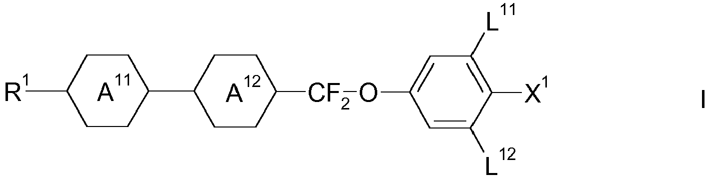 und optional
b) eine oder mehrere Verbindungen der Formel II 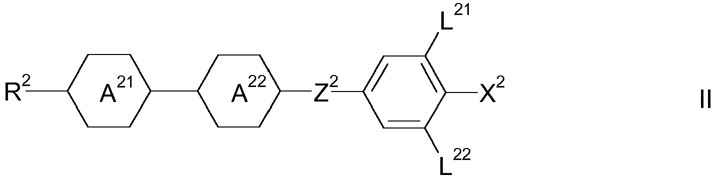 enthält, worin
   - R¹ und R²,: einen Alkyl- oder Alkoxyrest mit 1 bis 15 C-Atomen, wobei in diesen Resten ein oder mehrere H-Atome durch F ersetzt sein können und auch eine oder mehrere CH₂-Gruppen jeweils unabhängig voneinander durch 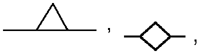 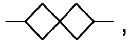 -C≡C-, -CH=CH-, -O-, -CO-O- oder -O-CO- so ersetzt sein können, daß O-Atome nicht direkt miteinander verknüpft sind, 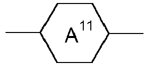 bis 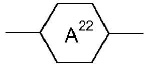 bei jedem Auftreten gleich oder verschieden 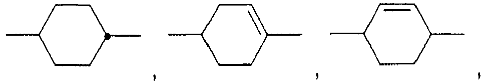 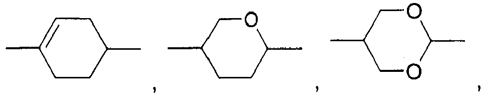 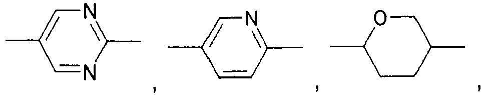 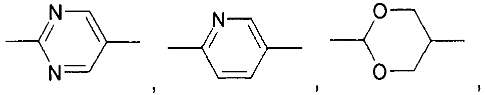 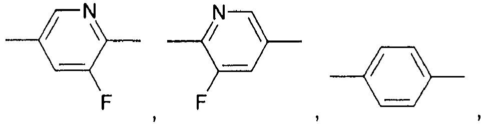 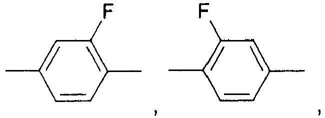 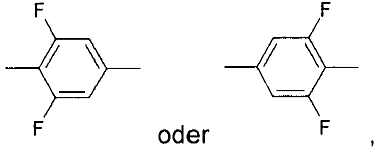 bevorzugt 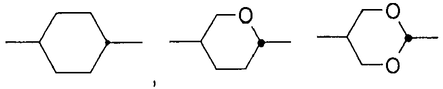 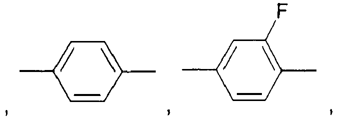 oder 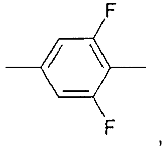
   - L¹¹, L¹², L²¹ und L²²,: unabhängig voneinander H oder F,
   bevorzugt
   - L¹¹ und/oder L²¹: F,
   - X¹ und X²: F, Cl, CN, halogenierter Alkylrest, halogenierter Alkenylrest, halogenierter Alkoxyrest oder halogenierter Alkenyloxyrest mit bis zu 6 C-Atomen,
   - Z²: -CH₂CH₂-, -CF₂CF₂-, -COO-, *trans*-CH=CH-, *trans*-CF=CF-, -CH₂O- oder eine Einfachbindung, bevorzugt -CH₂CH₂-, oder eine Einfachbindung und besonders bevorzugt eine Einfachbindung
bedeuten, wobei das Medium einen Klärpunkt von größer 120°C aufweist.

In der vorliegenden Anmeldung umfassen sämtliche Atome auch ihre Isotope. Insbesondere können ein oder mehrere Wasserstoffatome (H) durch Deuterium (D) ersetzt sein, was in einigen Ausführungsformen besonders bevorzugt ist; ein hoher Deuterierungsgrad ermöglicht oder erleichtert den analytischen Nachweis von Verbindungen, insbesondere im Falle geringer Konzentrationen.

Falls einer oder mehrere der Reste R¹ bis R³, R⁴¹, R⁴², R⁵¹ und R⁵², in den nachfolgenden Definitiononen kurz "R" genannt, einen Alkylrest und/oder einen Alkoxyrest bedeutet, so kann dieser geradkettig oder verzweigt sein. Vorzugsweise ist er geradkettig, hat 2, 3, 4, 5, 6 oder 7 C-Atome und bedeutet demnach bevorzugt Ethyl, Propyl, Butyl, Pentyl, Hexyl, Heptyl, Ethoxy, Propoxy, Butoxy, Pentoxy, Hexoxy oder Heptoxy, ferner Methyl, Octyl, Nonyl, Decyl, Undecyl, Dodecyl, Tridecyl, Tetradecyl, Pentadecyl, Methoxy, Octoxy, Nonoxy, Decoxy, Undecoxy, Dodecoxy, Tridecoxy oder Tetradecoxy.

Oxaalkyl bedeutet vorzugsweise geradkettiges 2-Oxapropyl (= Methoxymethyl), 2-(= Ethoxymethyl) oder 3-Oxybutyl (= 2-Methoxyethyl), 2-, 3- oder 4-Oxypentyl, 2-, 3-, 4- oder 5-Oxyhexyl, 2-, 3-, 4-, 5- oder 6-Oxyheptyl, 2-, 3-, 4-, 5-, 6-, oder 7-Oxaoctyl, 2-, 3-, 4-, 5-, 6-, 7- oder 8-Oxanonyl, 2-, 3-, 4-, 5-, 6-, 7-, 8- oder 9-Oxadexyl.

Falls R einen Alkylrest bedeutet, in dem eine CH₂-Gruppe durch -CH=CH-ersetzt ist, so kann dieser geradkettig oder verzweigt sein. Vorzugsweise ist er geradkettig und hat 2 bis 10 C-Atome. Er bedeutet demnach besonders Vinyl, Prop-1-, oder Prop-2-enyl, But-1-, 2- oder But-3-enyl, Pent-1-, 2-, 3- oder Pent-4-enyl, Hex-1-, 2-, 3-, 4- oder Hex-5-enyl, Hept-1-, 2-, 3-, 4-, 5- oder Hept-6-enyl, Oct-1-, 2-, 3-, 4-, 5-, 6- oder Oct-7-enyl, Non-1-, 2-, 3-, 4-, 5-, 6-, 7- oder Non-8-enyl, Dec-1-, 2-, 3-, 4-, 5-, 6-, 7-, 8- oder Dec-9-enyl.

Falls R einen Alkylrest bedeutet, in dem eine CH₂-Gruppe durch -O- und eine durch -CO- ersetzt ist, so sind diese bevorzugt benachbart. Somit beinhalten diese eine Acyloxygruppe -CO-O- oder eine Oxycarbonylgruppe -O-CO-. Vorzugsweise sind diese geradkettig und haben 2 bis 6 C-Atome. Sie bedeuten demnach besonders Acetyloxy, Propionyloxy, Butyryloxy, Pentanoyloxy, Hexanoyloxy, Acetyloxymethyl, Propionyloxymethyl, Butyryloxymethyl, Pentanoyloxymethyl, 2-Acetyloxyethyl, 2-Propionyloxyethyl, 2-Butyryloxyethyl, 2-Acetyloxypropyl, 3-Propionyl-oxypropyl, 4-Acetyl-oxybutyl, Methoxycarbonyl, Ethoxycarbonyl, Propoxy-carbonyl, Butoxycarbonyl, Pentoxycarbonyl, Methoxycarbonylmethyl, Ethoxycarbonylmethyl, Propoxycarbonylmethyl, Butoxycarbonylmethyl, 2-(Methoxycarbonyl)ethyl, 2-(Ethoxycarbonyl)ethyl, 2-(Propoxycarbonyl)-ethyl, 3-(Methoxycarbonyl)-propyl, 3-(Ethoxy-carbonyl)-propyl oder 4-(Methoxycarbonyl)-butyl.

Falls R einen Alkylrest bedeutet, in dem eine CH₂-Gruppe durch unsubstituiertes oder substituiertes -CH=CH- und eine benachbarte CH₂-Gruppe durch CO oder CO-O oder O-CO ersetzt ist, so kann dieser geradkettig oder verzweigt sein. Vorzugsweise ist er geradkettig und hat 4 bis 12 C-Atome. Er bedeutet demnach besonders Acryloyloxymethyl, 2-Acryloyl-oxyethyl, 3-Acryloyloxypropyl, 4-Acryloyloxybutyl, 5-Acryloyloxypentyl, 6-Acryloyloxyhexyl, 7-Acryloyloxyheptyl, 8-Acryloyloxyoctyl, 9-Acryloyl-oxynonyl, 10-Acryloyloxydecyl, Methacryloyloxymethyl, 2-Methacryloyl-oxyethyl, 3-Methacryloyloxypropyl, 4-Methacryloyloxybutyl, 5-Methacryl-oyloxypentyl, 6-Methacryloyloxyhexyl, 7-Methacryloyloxyheptyl, 8-Methacryloyloxyoctyl, 9-Methacryloyloxynonyl.

Falls R einen einfach durch CN oder CF₃ substituierten Alkyl- oder Alkenylrest bedeutet, so ist dieser Rest vorzugsweise geradkettig. Die Substitution durch CN oder CF₃ ist in beliebiger Position.
Falls R einen mindestens einfach durch Halogen substituierten Alkyl- oder Alkenylrest bedeutet, so ist dieser Rest vorzugsweise geradkettig und Halogen ist vorzugsweise F oder Cl. Bei Mehrfachsubstitution ist Halogen vorzugsweise F. Die resultierenden Reste schließen auch perfluorierte Reste ein. Bei Einfachsubstitution kann der Fluor- oder Chlorsubstituent in beliebiger Position sein, vorzugsweise jedoch in ω-Position.

Verbindungen mit verzweigten Flügelgruppen R können gelegentlich wegen einer besseren Löslichkeit in den üblichen flüssigkristallinen Basismaterialien von Bedeutung sein, insbesondere aber als chirale Dotierstoffe, wenn sie optisch aktiv sind. Smektische Verbindungen dieser Art eignen sich als Komponenten für ferroelektrische Materialien.

Verzweigte Gruppen dieser Art enthalten in der Regel nicht mehr als eine Kettenverzweigung. Bevorzugt verzweigte Reste R sind Isopropyl, 2-Butyl (= 1-Methylpropyl), Isobutyl (= 2-Methylpropyl), 2-Methylbutyl, Isopentyl (= 3-Methylbutyl), 2-Methylpentyl, 3-Methylpentyl, 2-Ethylhexyl, 2-Propylpentyl, Isopropoxy, 2-Methylpropoxy, 2-Methylbutoxy, 3-Methylbutoxy, 2-Methylpentoxy, 3-Methylpentoxy, 2-Ethylhexoxy, 1-Methylhexoxy, 1-Methylheptoxy.

Falls R einen Alkylrest darstellt, in dem zwei oder mehr CH₂-Gruppen durch -O- und/oder -CO-O- ersetzt sind, so kann dieser geradkettig oder verzweigt sind. Vorzugsweise ist er verzweigt und hat 3 bis 12 C-Atome. Er bedeutet demnach besonders Bis-carboxy-methyl, 2,2-Bis-carboxy-ethyl, 3,3-Bis-carboxy-propyl, 4,4-Bis-carboxy-butyl, 5,5-Bis-carboxy-pentyl, 6,6-Bis-carboxy-hexyl, 7,7-Bis-carboxy-heptyl, 8,8-Bis-carboxy-octyl, 9,9-Bis-carboxy-nonyl, 10,10-Bis-carboxy-decyl, Bis-(methoxy-carbonyl)-methyl, 2,2-Bis-(methoxycarbonyl)-ethyl, 3,3-Bis-(methoxy-carbonyl)-propyl, 4,4-Bis-(methoxycarbonyl)-butyl, 5,5-Bis-(methoxy--carbonyl)-pentyl, 6,6-Bis-(methocycarbonyl)-hexyl, 7,7-Bis-(methoxy-carbonyl)-heptyl, 8,8-Bis-(methoxycarbonyl)-octyl, Bis-(ethoxycarbonyl)-methyl, 2,2-Bis-(ethoxycarbonyl)-ethyl, 3,3-Bis-(ethoxycarbonyl)-propyl, 4,4-Bis-(ethoxycarbonyl)-butyl, 5,5-Bis-(ethoxycarbonyl)-hexyl.

Die Verbindungen der Formel I sind bevorzugt ausgewählt aus den Verbindungen der Unterformeln I-1 bis I-5 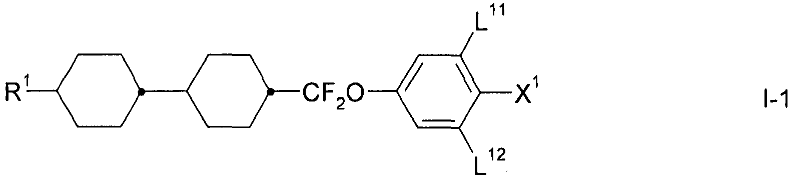 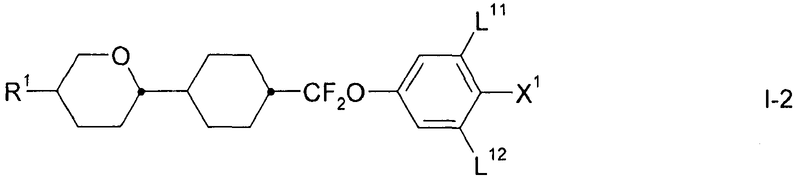 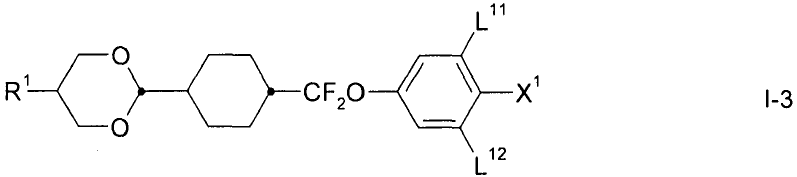 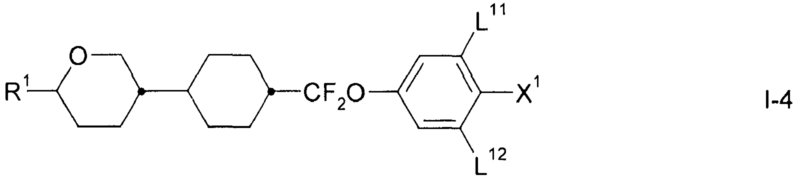 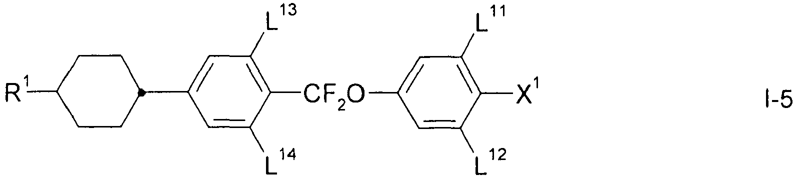 worin die Parameter die unter Formel I angegebene Bedeutung haben und L¹³ und L¹⁴ unabhängig voneinander H oder F bedeuten und bevorzugt
- R¹: n-Alkyl mit bis zu 7 C-Atomen,
- X¹: F, Cl, halogeniertes Alkyl oder halogeniertes Alkoxy mit bis zu 6 C-Atomen,
- L¹¹ bis L¹⁴: jeweils unabhängig voneinander H oder F,
bedeuten.
X¹ ist besonders bevorzugt F, Cl, CF₃, OCF₃, oder OCHF₂.

In einer besonders bevorzugten Ausführungsform sind die Verbindungen der Formel I ausgewählt aus den Verbindungen der Formeln I-1a bis I-1d 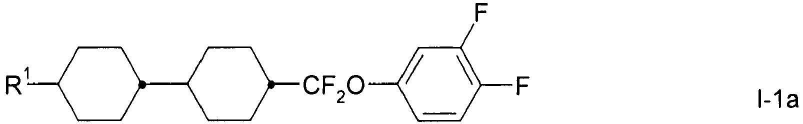 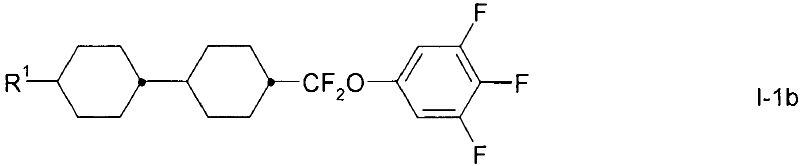 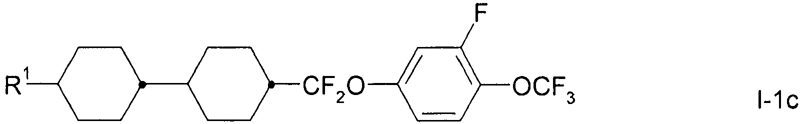 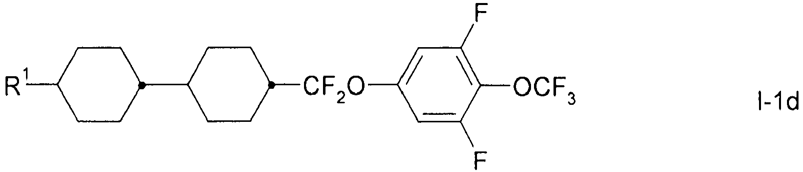 worin R¹ n-Alkyl mit 1 bis 7 C-Atomen bedeutet.
Ganz besonders bevorzugt enthält das Medium mindestens eine Verbindung der Formel I-1b.

In einer weiteren bevorzugten Ausführungsform enthalten die erfindungsgemäßen Medien eine oder mehrere Verbindungen ausgewählt aus der Gruppe der Verbindungen der Formeln IA und IB, 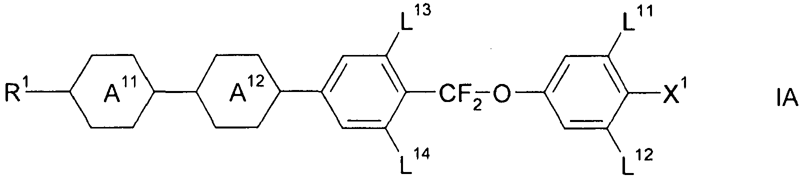 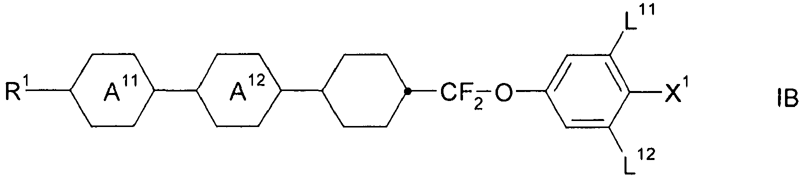 worin die Parameter die unter Formel I angegebene Bedeutung haben und bevorzugt
- R¹: n-Alkyl mit bis zu 7 C-Atomen,
- X¹: F, Cl, halogeniertes Alkyl oder halogeniertes Alkoxy mit bis zu 6 C-Atomen,
- L¹¹ bis L¹⁴: jeweils unabhängig voneinander H oder F,

X¹ ist besonders bevorzugt F, Cl, CF₃, OCF₃, oder OCHF₂.

Die Verbindungen der Formel IA sind bevorzugt ausgewählt aus den folgenden Unterformeln IA-1bis IA-7, besonders bevorzugt aus den Verbindungen der Formel IA-1. 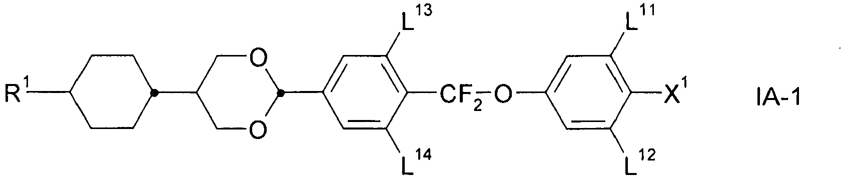 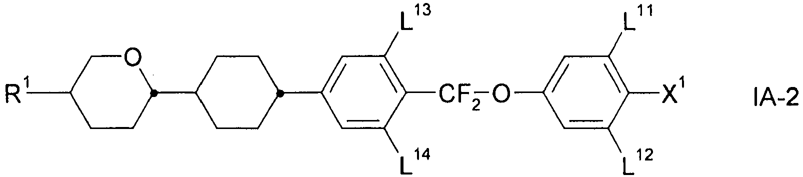 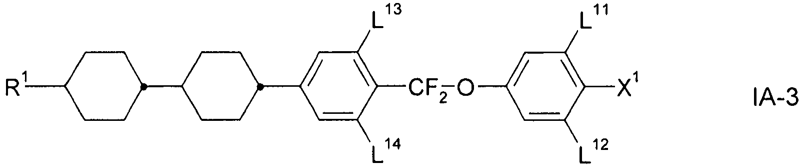 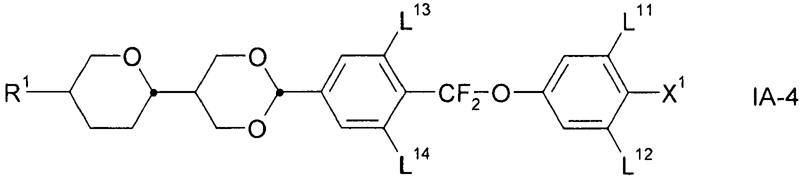 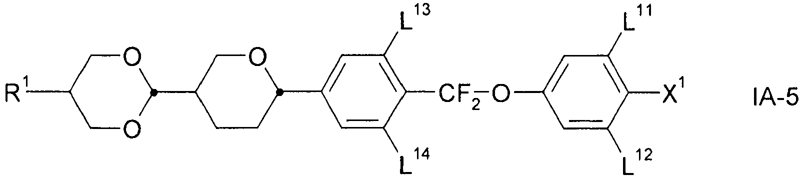 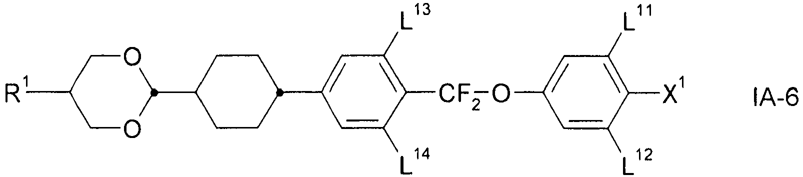 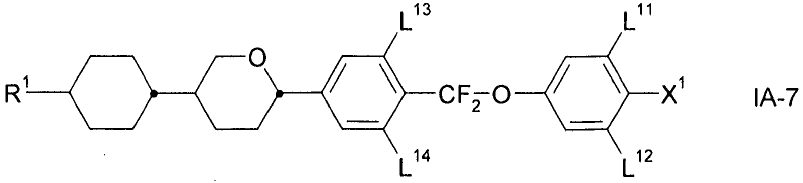 wobei die Parameter die oben angegebene Bedeutung haben.

Besonders bevorzugt sind die Verbindungen der Formel IA ausgewählt aus den Verbindungen der Formeln IA-1a bis IA-1d 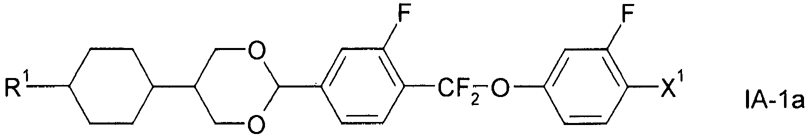 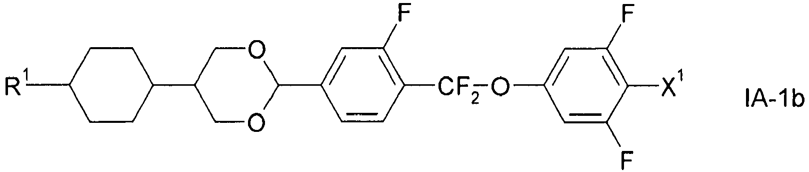 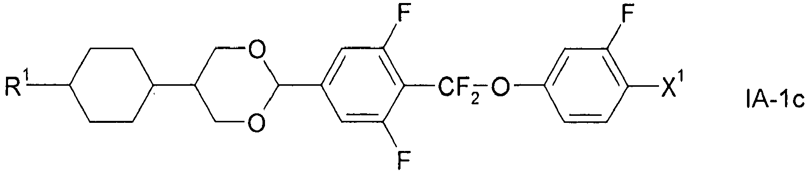 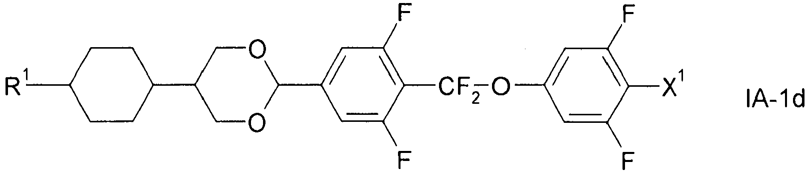 worin R¹ die oben angegebene Bedeutung hat und X¹ bevorzugt F oder OCF₃ bedeutet.

Ganz besonders bevorzugt sind die Verbindungen der Formel IA-1d.

Besonders bevorzugte Verbindungen der Formel IB sind ausgewählt aus den Verbindungen der Formel IB-1 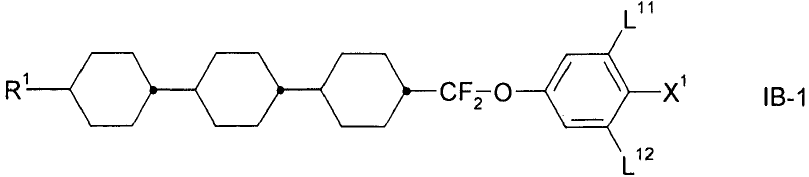 worin die Parameter die oben angegebene Bedeutung haben und bevorzugt mindestens einer der Reste L¹¹ und L¹² F bedeutet und X¹ F, Cl, CF₃ oder OCF₃ bedeutet.

Die Verbindungen der Formel II sind bevorzugt ausgewählt aus den Verbindungen der Unterformeln II-1 bis II-14. 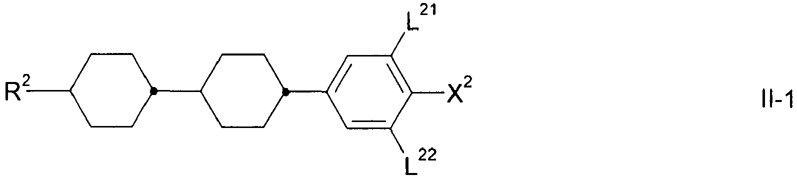 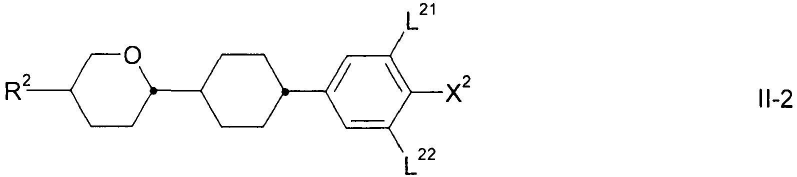 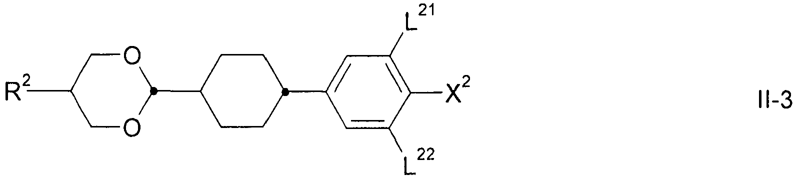 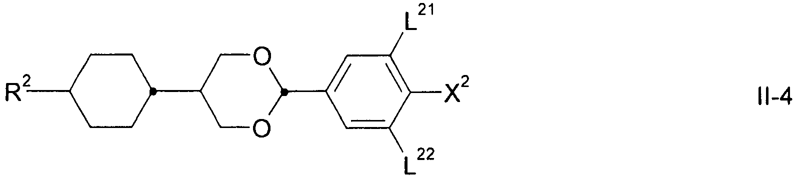 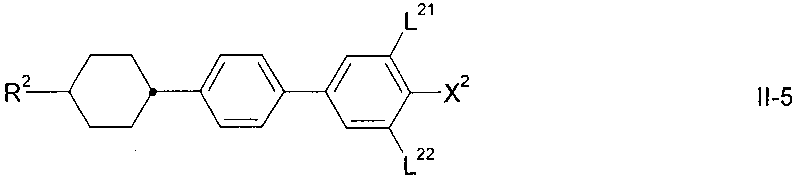 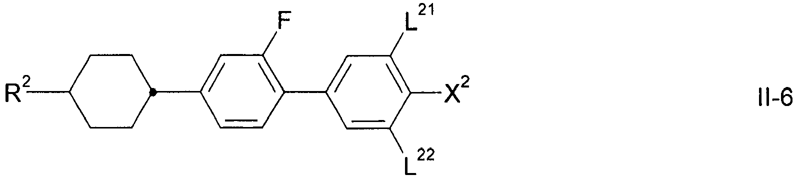 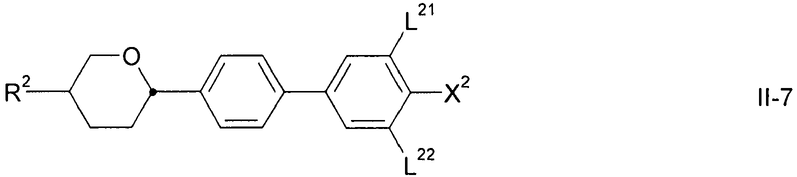 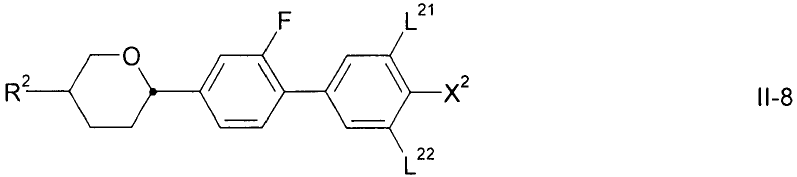 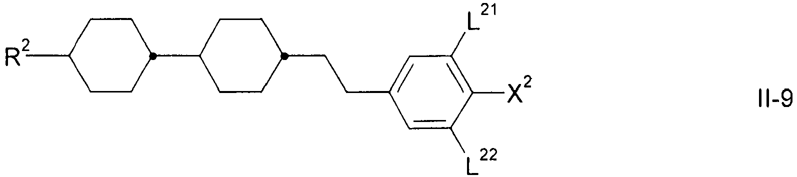 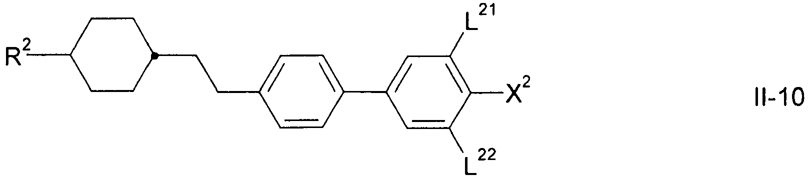 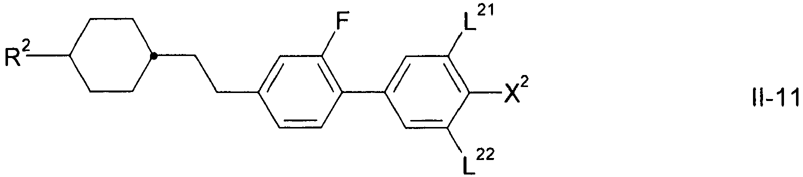 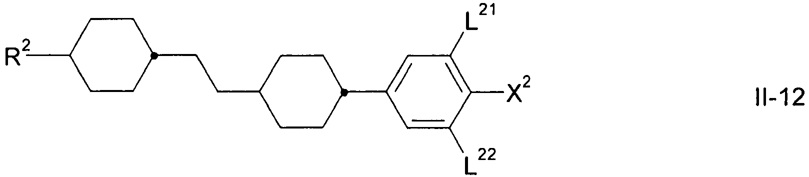 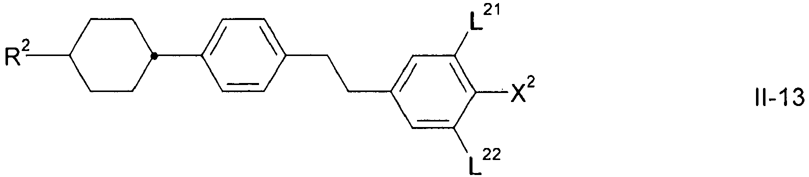 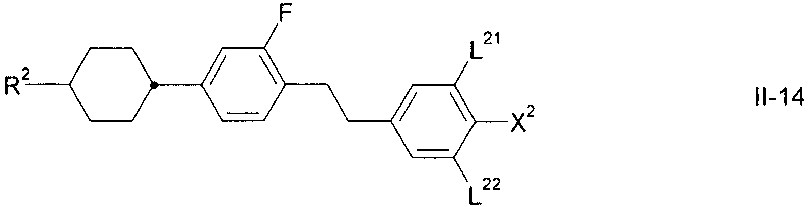 worin die Parameter die unter Formel II angegebene Bedeutung haben und bevorzugt
- R²: n-Alkyl mit bis zu 7 C-Atomen,
- X²: F, Cl, halogeniertes Alkyl oder halogeniertes Alkoxy mit bis zu 6 C-Atomen, und mindestens einer der Reste L²¹ und L²² F bedeuten.
- X¹: ist besonders bevorzugt F, Cl, CF₃, OCF₃, oder OCHF₂.

Besonders bevorzugt enthält das erfindungsgemäße Medium eine oder mehrere Verbindungen ausgewählt aus den Verbindungen der Formel II-1, II-5, II-9 und II-12, ganz besonders bevorzugt ausgewählt aus den Unterformeln II-1a, II-1b, II-5a bis II-5d, II-9a, II-9b, II-12a und II-12b. 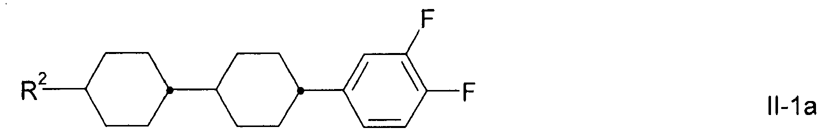 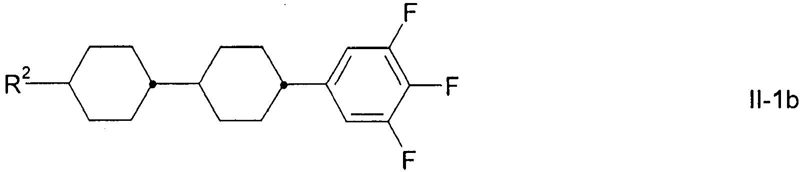 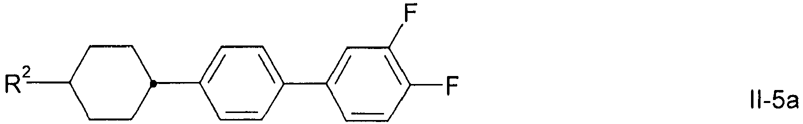 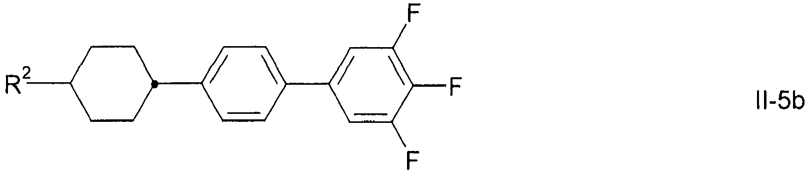 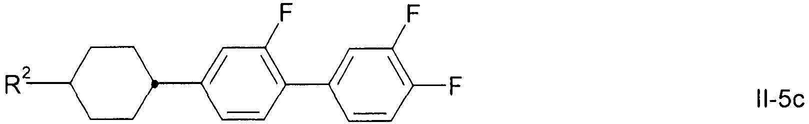 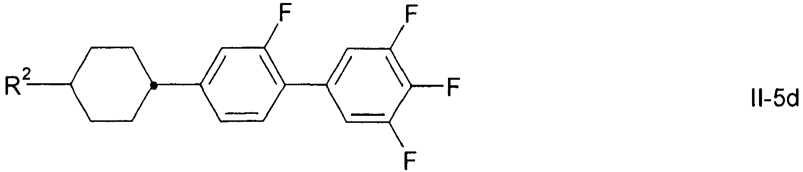 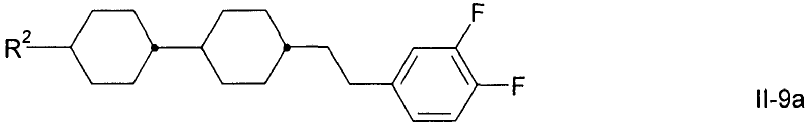 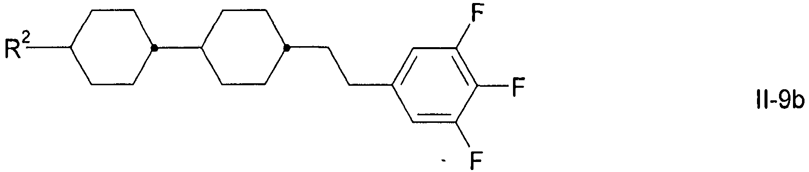 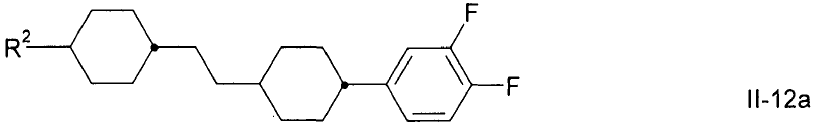 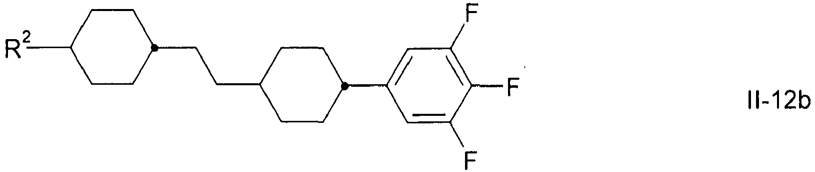 worin R² die oben angegebene Bedeutung hat und bevorzugt n-Alkyl mit 1 bis 7 C-Atomen bedeutet.

Ganz besonders bevorzugt enthält das Medium eine oder mehrere Verbindungen ausgewählt aus der Gruppe der Verbindungen der Formeln II-1b, II-5a, II-5b und II-9a.

In einer bevorzugten Ausführungsform enthält das Medium eine oder mehrere Verbindungen der allgemeinen Formel III 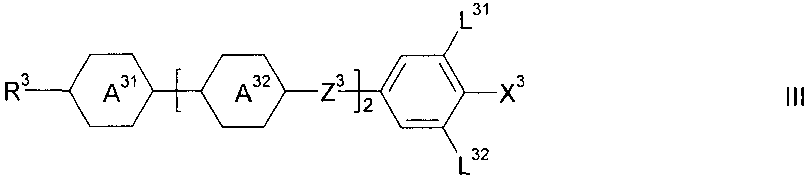 worin
R³ die oben unter Formel II für R² angegebene Bedeutung hat, 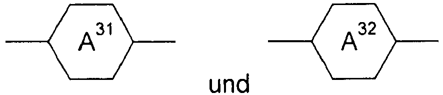 bei jedem Auftreten unabhängig voneinander 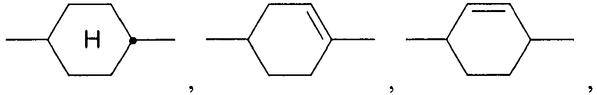 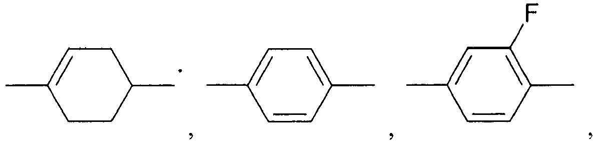 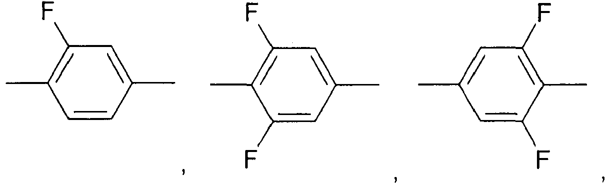 oder 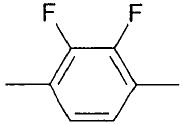 bedeuten,
   vorzugsweise einer oder mehrere von 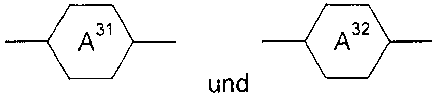 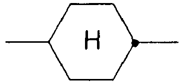 bedeutet,
L³¹ und L³², unabhängig voneinander H oder F,
   - X³: F, Cl, CN, halogenierter Alkylrest, halogenierter Alkenylrest, halogenierter Alkoxyrest oder halogenierter Alkenyloxyrest mit bis zu 6 C-Atomen,
   - Z³: bei jedem Auftreten unabhängig voneinander -CH₂CH₂-, -COO-, *trans-* -CH=CH-, *trans-* -CF=CF-, -CH₂O-, -C≡C- oder eine Einfachbindung bedeuten, vorzugsweise einer oder beide eine Einfachbindung bedeuten.

Die Verbindungen der Formel III sind bevorzugt ausgewählt aus der Gruppe der Verbindungen der Formeln III-1 bis III-9: 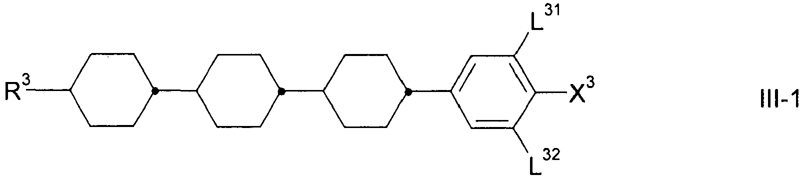 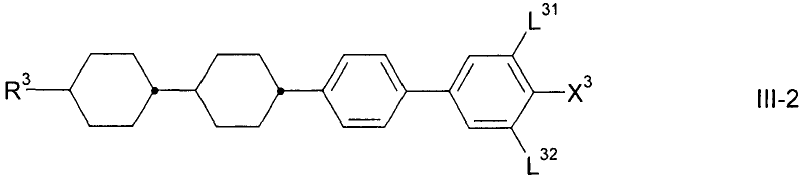 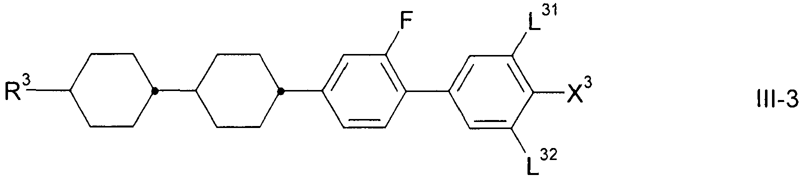 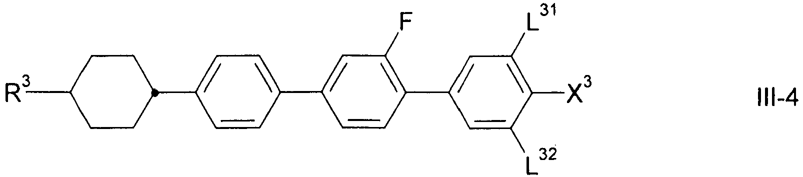 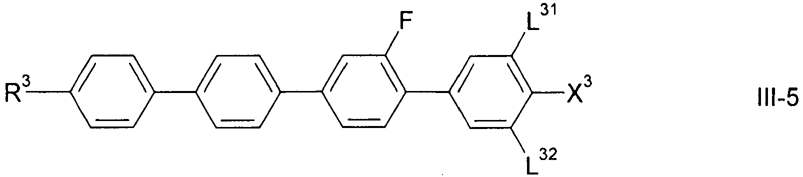 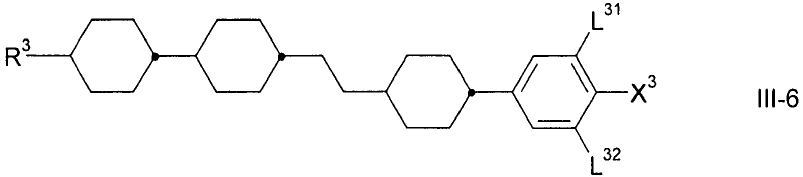 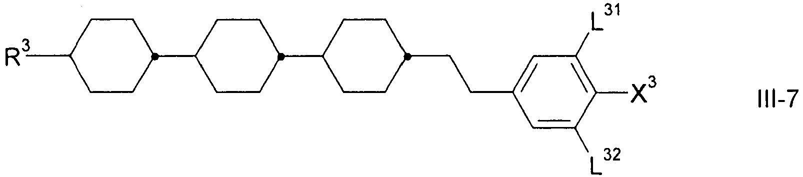 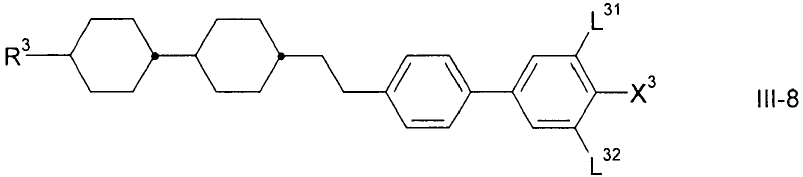 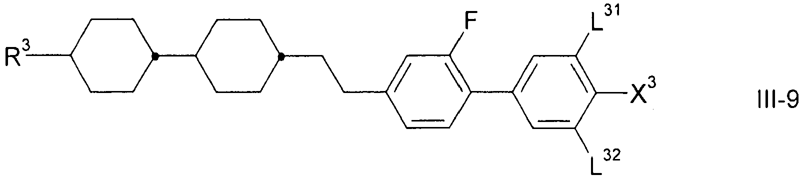 worin
- L³¹ und L³²: unabhängig voneinander H oder F bedeuten,
- X³: F, Cl, halogeniertes Alkyl oder halogeniertes Alkoxy mit bis zu 6 C-Atomen und bevorzugt F oder OCF₃ bedeutet.

Besonders bevorzugt enthält das Medium eine oder mehrere Verbindungen ausgewählt aus der Gruppe der Verbindungen der Formeln III-1 und III-3.

Ganz besonders bevorzugt enthält das Medium eine oder mehrere Verbindungen der folgenden Unterformeln : 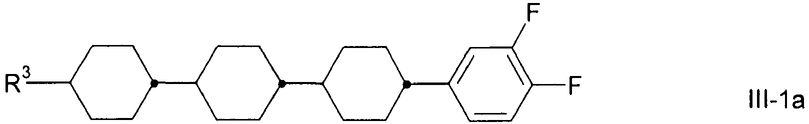 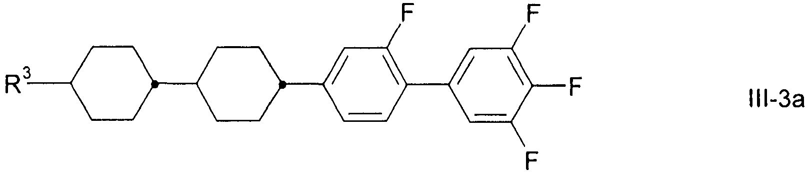 worin R³ bevorzugt n-Alkyl mit 1 bis 7 C-Atomen bedeutet.

Bevorzugt enthält das erfindungsgemäße Medium eine oder mehrere Verbindungen der Formel IV 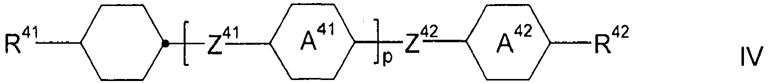 worin
- R⁴¹ und R⁴²: unabhängig voneinander die oben unter Formel II für R² angegebene Bedeutung besitzen, vorzugsweise R⁴¹ Alkyl und R⁴² Alkyl oder Alkoxy oder R⁴¹ Alkenyl und R⁴² Alkyl bedeutet, 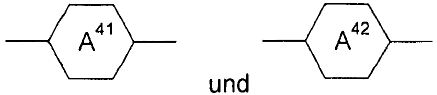 bei jedem Auftreten unabhängig voneinander 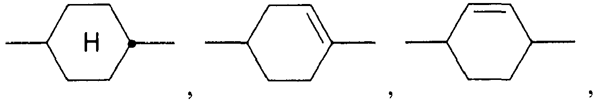 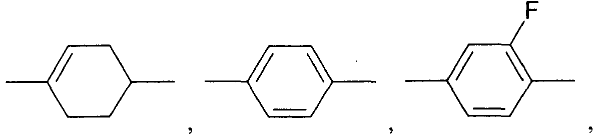 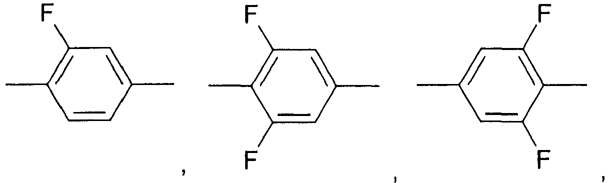 oder 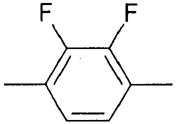 bedeuten, vorzugsweise einer oder mehrere von 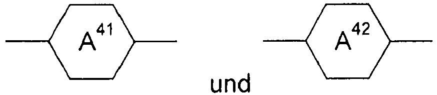 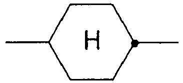 bedeutet bzw. bedeuten,
- Z⁴¹ und Z⁴²: bei jedem Auftreten unabhängig voneinander -CH₂CH₂-, -COO-, *trans-* -CH=CH-, *trans-* -CF=CF-, -CH₂O-, -CF₂O-, -C≡C- oder eine Einfachbindung bedeuten, vorzugsweise eines oder mehrere von ihnen eine Einfachbindung bedeutet/bedeuten und
- p: 0, 1 oder 2, vorzugsweise 0 oder 1 bedeutet.

Die Verbindungen der Formel IV sind bevorzugt ausgewählt aus der Gruppe der Verbindungen IV-1 bis IV-13 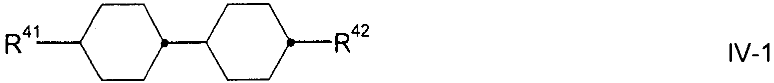 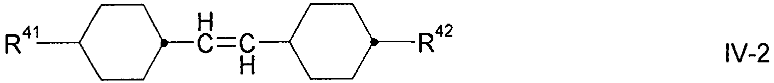 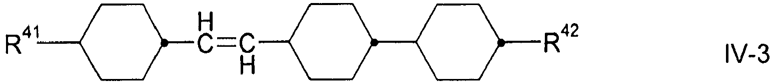 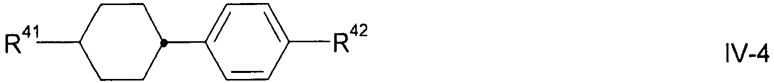 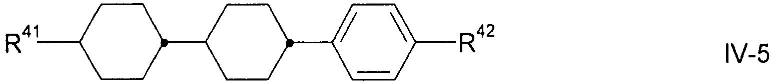 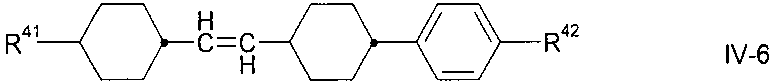 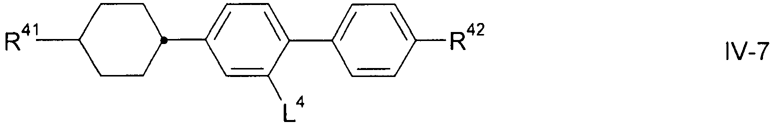 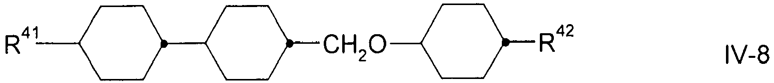 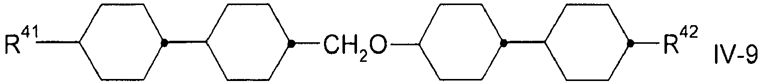 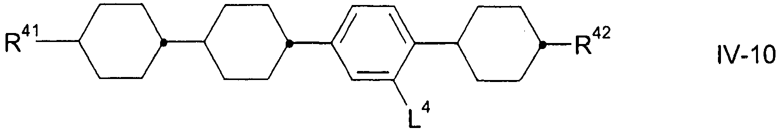 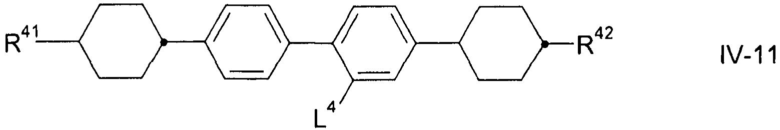 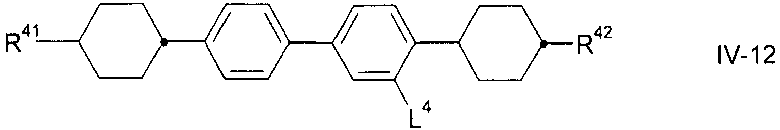 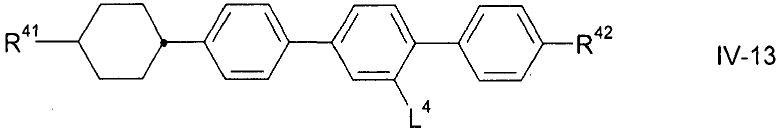 worin
- R⁴¹ und R⁴²: unabhängig voneinander n-Alkyl mit 1 bis 7 C-Atomen und
- L⁴: H oder F bedeutet, bevorzugt F.

Besonders bevorzugt enthält das erfindungsgemäße Medium eine oder mehrere Verbindungen ausgewählt aus der Grupp der Verbindungen IV-5, IV-8 und IV-11.

In einer weiteren bevorzugten Ausführungsform enthält das erfindungsgemäße Medium eine oder mehrere Verbindungen der Formel V 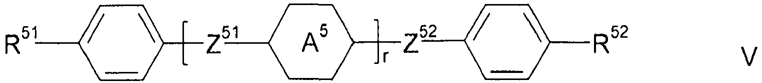 worin
- R⁵¹ und R⁵²: unabhängig voneinander die oben unter Formel II für R² angegebene Bedeutung besitzen, vorzugsweise R⁶¹ Alkyl und R⁶² Alkyl oder Alkenyl bedeutet, 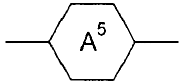 bei jedem Auftreten unabhängig voneinander 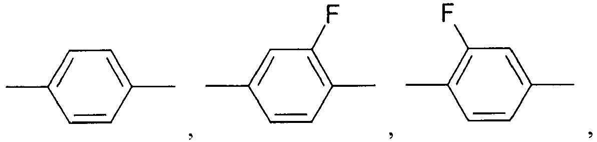 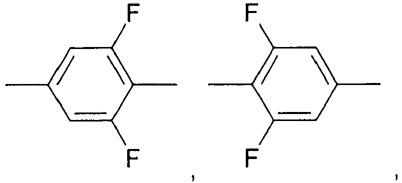 oder 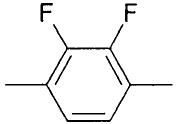 bedeuten, vorzugsweise einer oder mehrere von 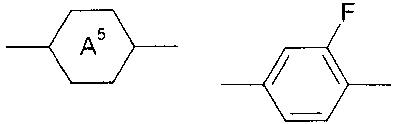 bedeuten,
- Z⁵¹ und Z⁵²: unabhängig voneinander und bei zweifachem Auftreten von Z⁵¹ auch diese unabhängig voneinander -CH₂CH₂-, -COO-, *trans-* -CH=CH-, *trans-* -CF=CF-, -CH₂O-, oder eine Einfachbindung bedeuten, vorzugsweise eines oder mehrere von ihnen eine Einfachbindung bedeutet/bedeuten, und
- r: 0, 1 oder 2, vorzugsweise 1 oder 2, besonders bevorzugt 1, bedeutet.

In einer weiteren bevorzugten Ausführungsform enthält das Medium eine oder mehrere Verbindungen ausgewählt aus der Gruppe der Verbindungen der Formeln V-1 und V-2 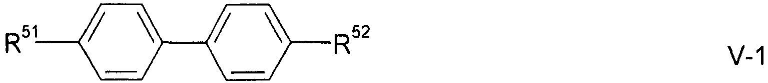 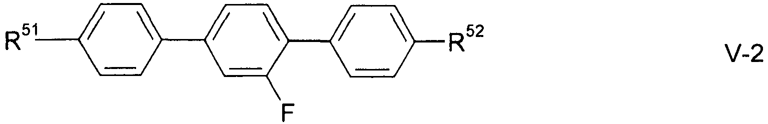 worin R⁵¹ und R⁵² die jeweiligen oben unter Formel V angegebenen Bedeutungen besitzen und vorzugsweise Alkyl bedeuten

Die Verbindungen der Formeln I bis V werden nach an sich bekannten Methoden dargestellt, wie sie in der Literatur (z.B. in den Standardwerken wie Houben-Weyl, Methoden der Organischen Chemie, Georg-Thieme-Verlag, Stuttgart) beschrieben sind, und zwar unter Reaktionsbedingungen, die für die genannten Umsetzungen bekannt und geeignet sind. Dabei kann man auch von an sich bekannten, hier nicht näher erwähnten Varianten Gebrauch machen. Die Verbindungen der Formel I und IA sind beispielsweise aus der DE 10 2008 062858 A1 bekannt. Die Verbindungen der Formel IB sind in DE 102223061 A1 offengelegt.

Weiterer Gegenstand der Erfindung sind auch elektrooptische Bauteile, insbesondere Lichtventile, basierend auf dem TN oder STN -Effekt, mit zwei planparallelen Trägerplatten, die mit einer Umrandung eine Zelle bilden, integrierten nicht-linearen Elementen zur Schaltung einzelner Bildpunkte auf den Trägerplatten und einer in der Zelle befindlichen nematischen Flüssigkristallmischung mit positiver dielektrischer Anisotropie und hohem spezifischem Widerstand, die die erfindungsgemäßen Medien enthalten sowie die Verwendung dieser Medien für elektrooptische Zwecke.

Weiterer Gegenstand der Erfindung ist deren Verwendung in Beleuchtungseinrichtungen für Kraftfahrzeuge und in Flüssigkristallanzeigen, insbesondere TN, STN- oder MFK-Anzeigen.

Weiterer Gegenstand der Erfindung sind Beleuchtungseinrichtungen für Kraftfahrzeuge sowie elektrooptische Anzeigen, die diese Bauteile enthalten.

Die erfindungsgemäßen Flüssigkristallmischungen ermöglichen eine bedeutende Erweiterung des zur Verfügung stehenden Parameterraumes. Die erzielbaren Kombinationen aus Klärpunkt, Phasenbreite, Viskosität bei tiefer Temperatur, thermischer und UV-Stabilität und dielektrischer Anisotropie übertreffen bei weitem bisherige Materialien aus dem Stand der Technik.

Es versteht sich, daß durch geeignete Wahl der Komponenten der erfindungsgemäßen Mischungen auch höhere Klärpunkte (z.B. oberhalb von 150 °C) bei höheren Schwellenspannungen oder niedrigere Klärpunkte bei niedrigeren Schwellenspannungen unter Erhalt der anderen vorteilhaften Eigenschaften realisiert werden können. Ebenso können bei entsprechend wenig erhöhten Viskositäten Mischungen mit größerem Δε und somit geringen Schwellen erhalten werden. Die erfindungsgemäßen elektrooptischen Bauteile arbeiten vorzugsweise im ersten Transmissionsminimum nach Gooch und Tarry [C.H. Gooch und H.A. Tarry, Electron. Lett. 10, 2-4, 1974; C.H. Gooch und H.A. Tarry, Appl. Phys., Vol. 8, 1575-1584, 1975], wobei hier neben besonders günstigen elektrooptischen Eigenschaften, wie z.B. hohe Steilheit der Kennlinie und geringe Winkelabhängigkeit des Kontrastes (DE-PS 30 22 818) bei gleicher Schwellenspannung wie in einer analogen Anzeige im zweiten Minimum, eine kleinere dielektrische Anisotropie ausreichend ist. Hierdurch lassen sich unter Verwendung der erfindungsgemäßen Mischungen im ersten Minimum deutlich höhere spezifische Widerstände verwirklichen als bei Mischungen mit Cyanverbindungen. Der Fachmann kann durch geeignete Wahl der einzelnen Komponenten und deren Gewichtsanteilen mit einfachen Routinemethoden die für eine vorgegebene Schichtdicke des Bauteils erforderliche Doppelbrechung einstellen.

Messungen des "Voltage Holding-ratio" (HR) [S. Matsumoto et al., Liquid Crystals 5, 1320 (1989); K. Niwa et al., Proc. SID Conference, San Francisco, June 1984, p. 304 (1984); G. Weber et al., Liquid Crystals 5, 1381 (1989)] haben ergeben, daß erfindungsgemäße Mischungen enthaltend Verbindungen der Formel I, IA und IB eine deutlich kleinere Abnahme des HR mit steigender Temperatur aufweisen als analoge Mischungen enthaltend anstelle der Verbindungen der Formel I, IA und IB Cyanophenylcyclohexane der Formel 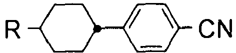 oder Ester der Formel

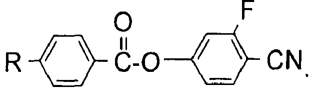

Auch die UV-Stabilität der erfindungsgemäßen Mischungen ist erheblich besser, d.h. sie zeigen eine deutlich kleinere Abnahme des HR unter UV-Belastung.

Die erfindungsgemäßen Flüssigkristallmischungen ermöglichen es unter Beibehaltung der nematischen Phase bis -20 °C und bevorzugt bis -30 °C, besonders bevorzugt bis -40 °C, Klärpunkt oberhalb 120 °C, vorzugsweise oberhalb 130 °C, besonders bevorzugt oberhalb 140 °C, gleichzeitig dielektrische Anisotropiewerte Δε ≥ 6, vorzugsweise ≥ 8 und einen hohen Wert für den spezifischen Widerstand zu erreichen, wodurch hervorragende erfindungsgemäße Lichtventile erzielt werden können. Insbesondere sind die Mischungen durch kleine Betriebsspannungen gekennzeichnet. Die TN-Schwellen liegen unterhalb 2,0 V, vorzugsweise unterhalb 1,5 V, besonders bevorzugt < 1,3 V.

Die erfindungsgemäßen Flüssigkristallmischungen weisen eine optische Anisotropie (Δn) im Bereich von 0,050 bis 0,110 auf, bevorzugt von 0,060 bis 0,100 , besonders bevorzugt von 0,080 bis 0,090.

Die Rotationsviskosität γ₁ der erfindungsgemäßen Mischungen bei 20 °C ist vorzugsweise < 350 mPa·s, besonders bevorzugt < 300 mPa·s. Der nematische Phasenbereich ist vorzugsweise mindestens 140 K, insbesondere mindestens 180 K. Vorzugsweise erstreckt sich dieser Bereich mindestens von -40° bis +140°.

Bevorzugte Ausführungsformen sind im folgenden angegeben:
- Das Medium enthält eine oder mehr Verbindungen der Formel I in einer Gesamtkonzentration im Bereich von 40 bis 70%, bevorzugt von 40 bis 60% besonders bevorzugt von 40% bis 50%.
- Die Gesamtkonzentration an Verbindungen der Formel II im Medium beträgt 18% bis 50%, bevorzugt 23% bis 45% und besonders bevorzugt 30% bis 40%.
- Das Medium enthält eine oder mehr Verbindungen der Formel II-1 b in einer Gesamtkonzentration von 10% bis 35%, bevorzugt von 12% bis 30, besonders bevorzugt von 15% bis 25%.
- Die Gesamtkonzentration der Verbindungen der Formeln IV-1, IV-2, IV-3, IV-4, IV-5 und IV-6 im Medium beträgt 3 bis 20, bevorzugt 5 bis 18, besonders bevorzugt 8% bis 16%.Vorzugsweise enthält das Medium mindestens eine Verbindung der Formel IV-5.
- Die Gesamtkonzentration an Verbindungen der Formeln IV-7, IV-8, IV-9, IV-10, IV-11, IV-12 und IV-13 beträgt 2% bis 20%, bevorzugt 4% bis 16% und besonders bevorzugt 6% bis 13%. Bevorzugt enthält das Medium mindestens eine Verbindung der Formel IV-8 oder IV-11.
- Das Medium enthält eine oder mehrere Verbindung ausgewählt aus der Gruppe der Verbindungen CCGU-n-F, CCCG-n-F, CCCQU-n-F, CCCQU-n-OT und CDUQU-n-F. (Die Bedeutung der Akronyme kann den unten aufgeführten Tabellen A und B entnommen werden)
- Der Anteil der Verbindungen mit ungesättigten Seitenketten (d.h. R bedeutet Alkenyl oder Alkinyl) im Medium ist 0 bis 10%, bevorzugt 0 bis 5%, besonders bevorzugt 0 bis 2%.

Es wurde gefunden, daß die erfindungsgemäßen Flüssigkristallmischungen unter Verwendung einer oder mehrerer Verbindungen ausgewählt aus den Verbindungen der Formeln IA, IB und I bis V gegenüber dem Stand der Technik zu niedrigen Werten für die Doppelbrechung führt, wobei gleichzeitig breite nematische Phasen, hohe Klärpunkte und tiefe Übergangstemperaturen smektisch-nematisch beobachtet werden, wodurch die Lagerstabilität verbessert wird. Bevorzugt sind insbesondere Mischungen, die neben einer oder mehreren Verbindungen der Formeln I, IA und IB eine oder mehrere Verbindungen der Formel II enthalten, insbesondere Verbindungen der Formel II-1b. Alle genannten Verbindungen sind farblos, stabil und untereinander und mit anderen Flüssigkristallmaterialien gut mischbar.

Das optimale Mengenverhältnis der Verbindungen der Formeln I, IA, IB und II bis V hängt weitgehend von den gewünschten Eigenschaften, von der Wahl der Komponenten der Formeln I, IA, IB und II bis V und der Wahl weiterer gegebenenfalls vorhandener Komponenten ab.
Geeignete Mengenverhältnisse innerhalb des oben angegebenen Bereichs können von Fall zu Fall leicht ermittelt werden.

Die Gesamtmenge an Verbindungen der Formeln I, IA, IB und II bis V in den erfindungsgemäßen Gemischen ist nicht kritisch. Die Gemische können daher eine oder mehrere weitere Komponenten enthalten zwecks Optimierung verschiedener Eigenschaften. Der beobachtete Effekt auf die Ansprechzeiten und die Schwellenspannung ist jedoch in der Regel um so größer je höher die Gesamtkonzentration an Verbindungen der Formeln I, IA, IB, II und III sind. Weiterhin ist der Klärpunkt umzog höher, je größer der Anteil an Verbindungen der Formeln IA, IB, III und IV ist.

Der Aufbau der erfindungsgemäßen Lichtventile aus Polarisatoren, Elektrodengrundplatten und Elektroden mit Oberflächenbehandlung entspricht der für derartige Bauteile üblichen Bauweise. Dabei ist der Begriff der üblichen Bauweise hier weit gefaßt und umfaßt auch alle Abwandlungen und Modifikationen der Bauteile, insbesondere auch Matrix-Anzeigeelemente auf Basis poly-Si TFT oder MIM.

Ein wesentlicher Unterschied der erfindungsgemäßen Flüssigkristallichtventile zu den bisher üblichen auf der Basis der verdrillten nematischen Zelle besteht jedoch in der Wahl der Flüssigkristallparameter der Flüssigkristallschicht.

Die Herstellung der erfindungsgemäß verwendbaren Flüssigkristallmischungen erfolgt in an sich üblicher Weise. In der Regel wird die gewünschte Menge der in geringerer Menge verwendeten Komponenten in der den Hauptbestandteil ausmachenden Komponenten gelöst, zweckmäßig bei erhöhter Temperatur. Es ist auch möglich, Lösungen der Komponenten in einem organischen Lösungsmittel, z.B. in Aceton, Chloroform oder Methanol, zu mischen und das Lösungsmittel nach Durchmischung wieder zu entfernen, beispielsweise durch Destillation.

Die Dielektrika können auch weitere, dem Fachmann bekannte und in der Literatur beschriebene Zusätze enthalten. Beispielsweise können 0-15 % pleochroitische Farbstoffe oder chirale Dotierstoffe zugesetzt werden.

C bedeutet eine kristalline, S eine smektische, S_{c} eine smektisch C, N eine nematische und I die isotrope Phase.

V₁₀ bezeichnet die Spannung für 10 % Transmission (Blickrichtung senkrecht zur Plattenoberfläche). tₒₙ bezeichnet die Einschaltzeit und toff die Ausschaltzeit bei einer Betriebsspannung entsprechend dem 2,0fachen Wert von V₁₀. Δn bezeichnet die optische Anisotropie und nₒ den Brechungsindex. Δε bezeichnet die dielektrische Anisotropie (Δε = ε_{||} - ε_{┴}, wobei ε_{||} die Dielektrizitätskonstante parallel zu den Moleküllängsachsen und ε_{┴} die Dielektrizitätskonstante senkrecht dazu bedeutet). Die elektrooptischen Daten wurden in einer TN-Zelle im 1. Minimum (d.h. bei einem d · Δn-Wert von 0,5) bei 20 °C gemessen, sofern nicht ausdrücklich etwas anderes angegeben wird. Die optischen Daten wurden bei 20 °C gemessen, sofern nicht ausdrücklich etwas anderes angegeben wird.

In der vorliegenden Anmeldung und in den folgenden Beispielen sind di Strukturen der Flüssigkristallverbindungen durch Akronyme angegeben, wobei die Transformation in chemische Formeln gemäß folgender Tabel A und B erfolgt. Alle Reste CₙH₂ₙ₊₁ und CₘH₂ₘ₊₁ sind geradkettige Alkylreste mit n bzw. m C-Atomen; n und m sind ganze Zahlen und bedeuten vorzugsweise 0, 1, 2, 3, 4, 5, 6, 7, 8, 9, 10, 11 oder 12. Die Kodierung gemäß Tabelle B versteht sich von selbst. In Tabelle A ist nur das Akronym für den Grundkörper angegeben. Im Einzelfall folgt getrennt von Akronym für den Grundkörper mit einem Strick ein Code für die Substituenten R^{1*}, R^{2*}, L^{1*}, L^{2*} und L^{3*}:

| Code für R^{1*}, R^{2*}, L^{1*}, L^{2*}, L^{3*} | R^{1*} | R^{2*} | L^{1*} | L^{2*} | L^{3*} |
|---|---|---|---|---|---|
| nm | CₙH₂ₙ₊₁ | CₘH₂ₘ₊₁ | H | H | H |
| nOm | OCₙH₂ₙ₊₁ | CₘH₂ₘ₊₁ | H | H | H |
| nO.m | CₙH₂ₙ₊₁ | OcₘH₂ₘ₊₁ | H | H | H |
| n | CₙH₂ₙ₊₁ | CN | H | H | H |
| nN.F | CₙH₂ₙ₊₁ | CN | H | H | F |
| nN.F.F | CₙH₂ₙ₊₁ | CN | H | F | F |
| nF | CₙH₂ₙ₊₁ | F | H | H | H |
| nOF | OCₙH₂ₙ₊₁ | F | H | H | H |
| nF.F | CₙH₂ₙ₊₁ | F | H | H | F |
| nmF | CₙH₂ₙ₊₁ | CₘH₂ₘ₊₁ | F | H | H |
| nOCF₃ | CₙH₂ₙ₊₁ | OCF₃ | H | H | H |
| nOCF₃.F | CₙH₂ₙ₊₁ | OCF₃ | F | H | H |
| n-Vm | CₙH₂ₙ₊₁ | -CH=CH-CₘH₂ₘ₊₁ | H | H | H |
| nV-Vm | CₙH₂ₙ₊₁-CH=CH- | -CH=CH-CₘH₂ₘ₊₁ | H | H | H |

Bevorzugte Mischungskomponenten finden sich in den Tabellen A und B.

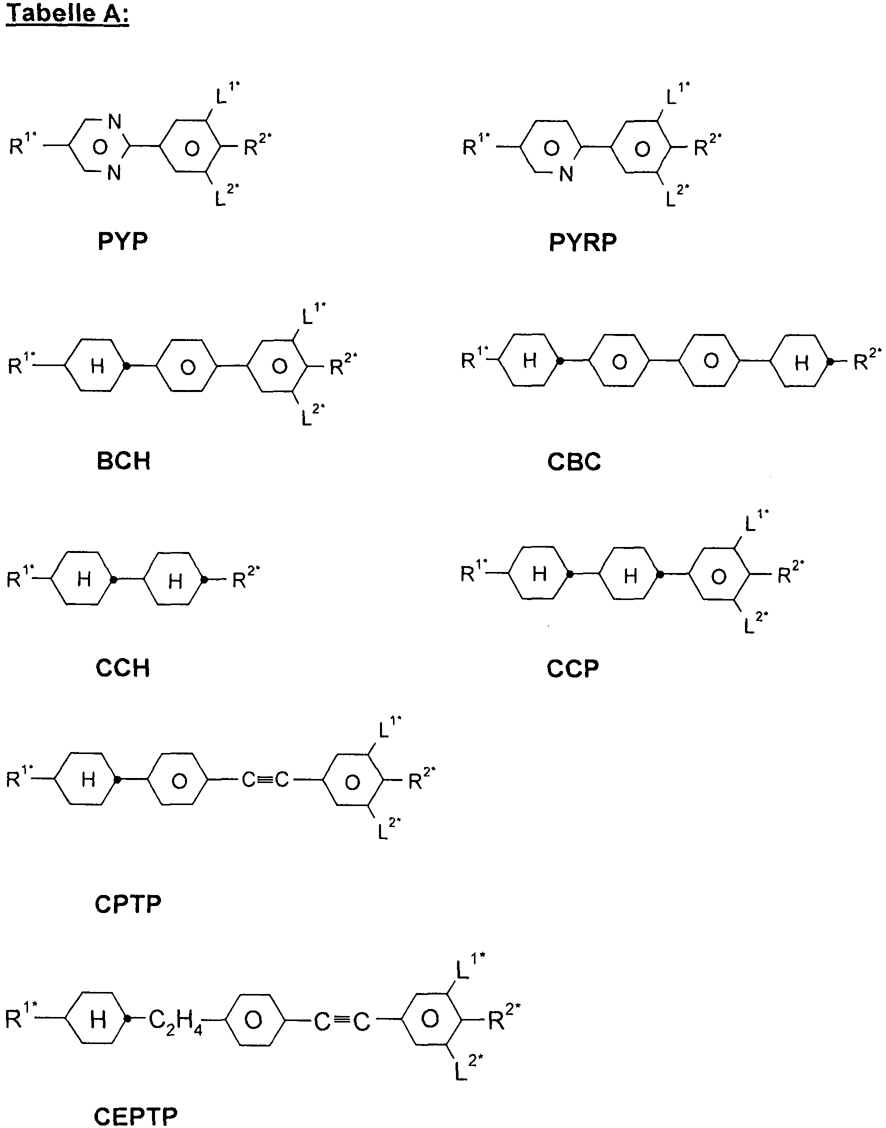

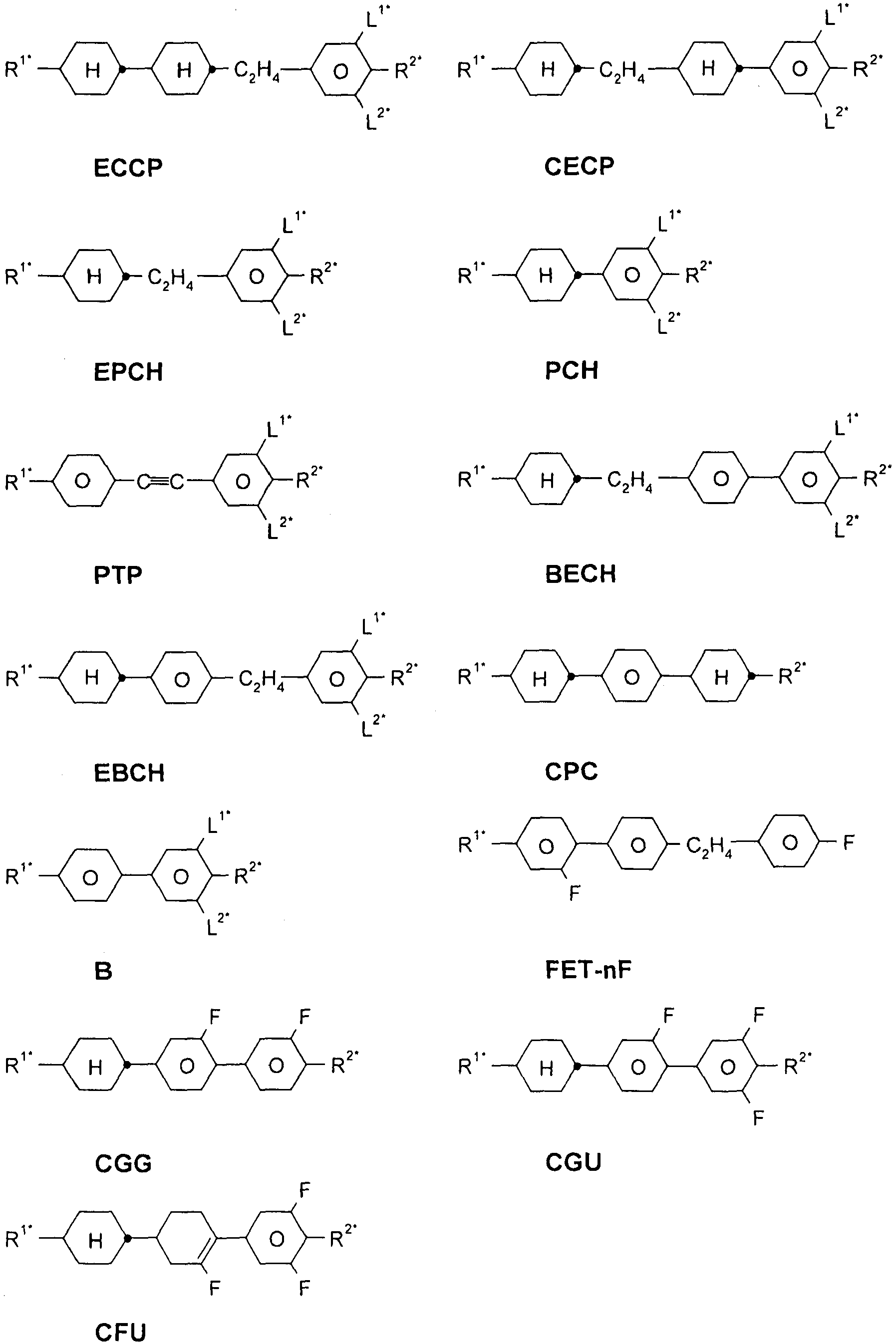

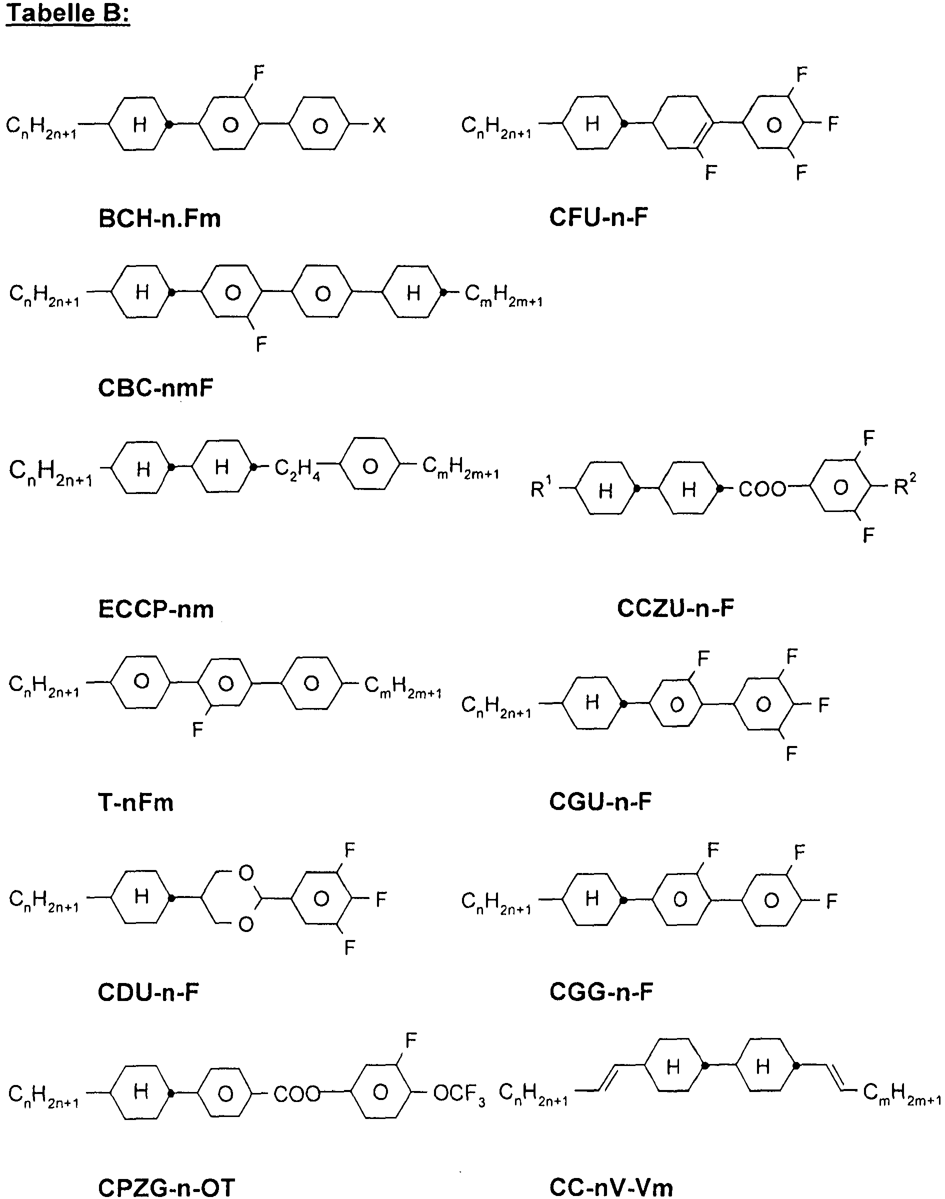

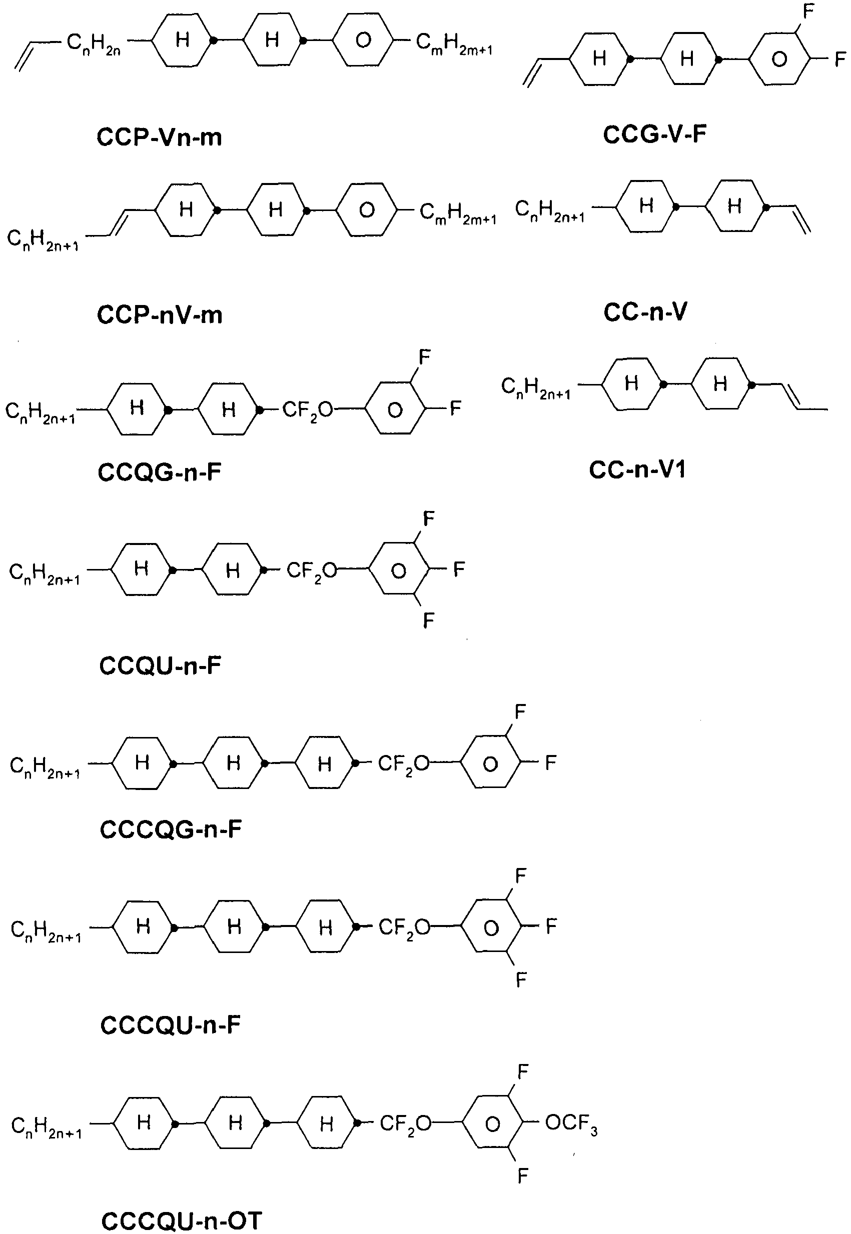

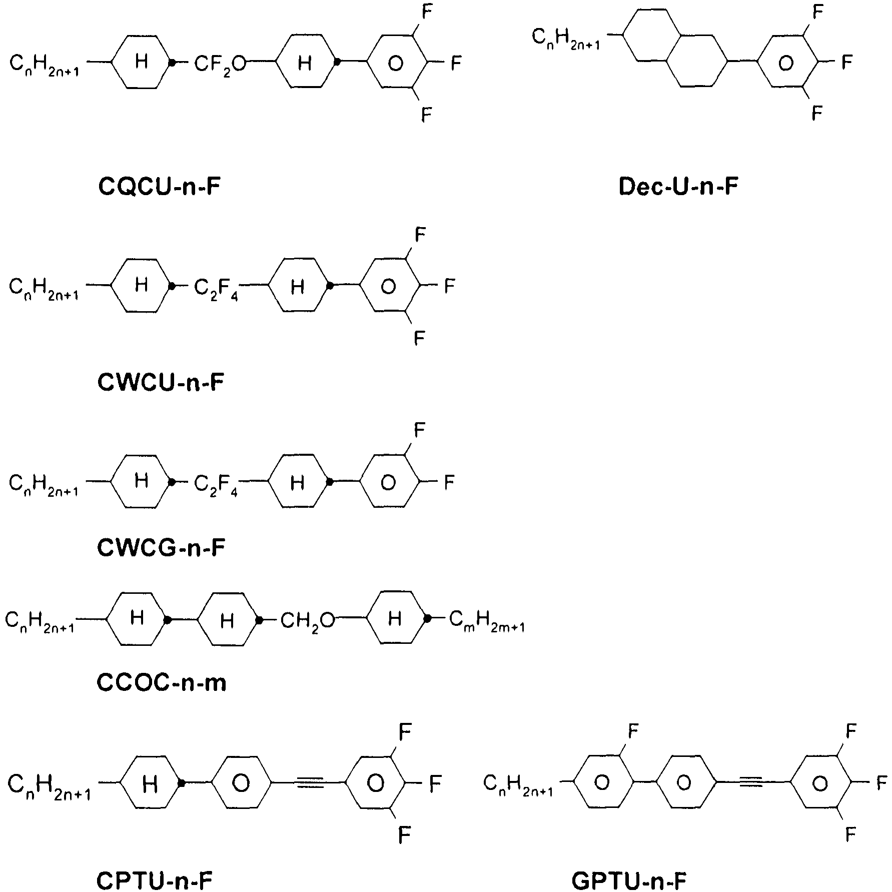

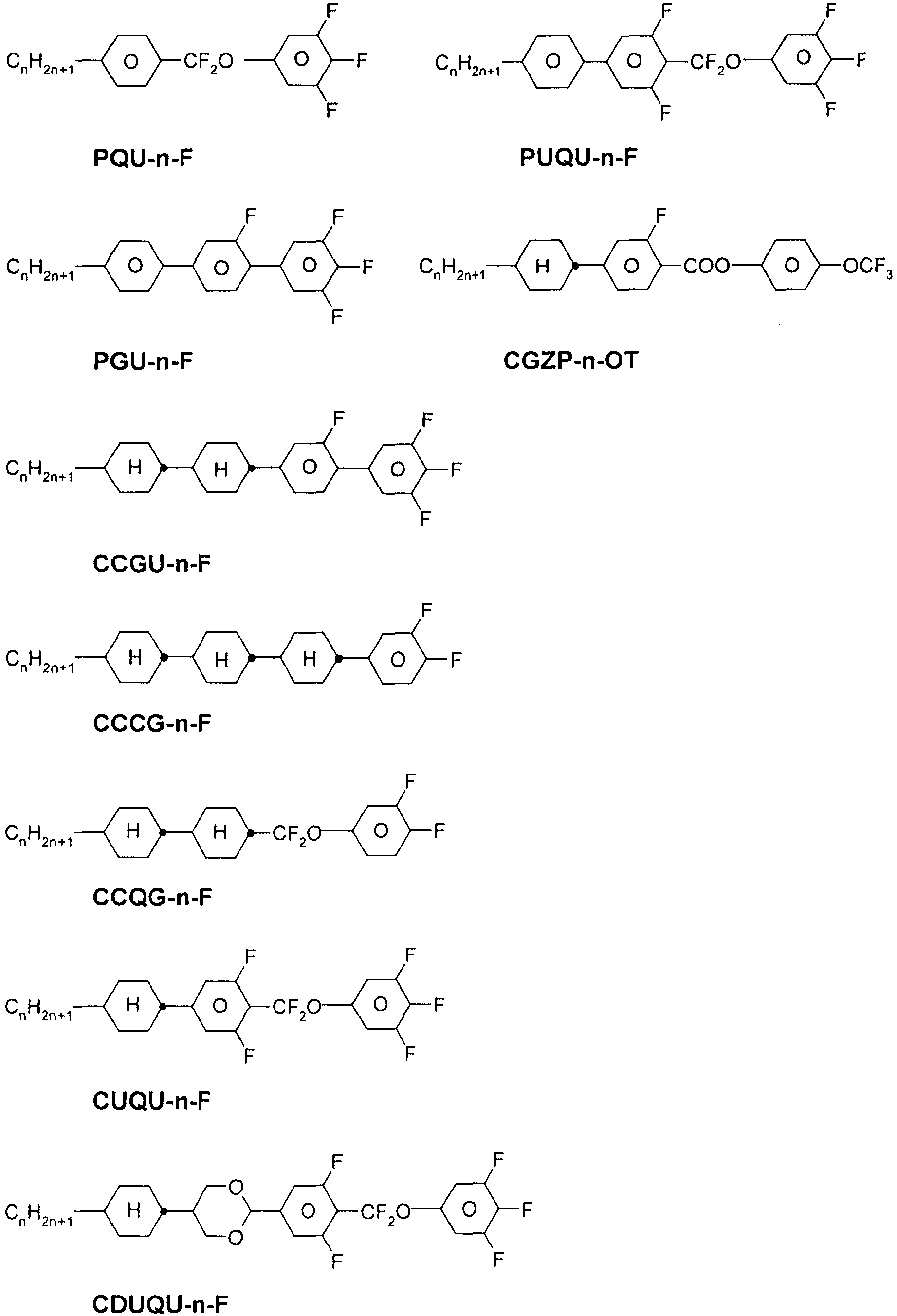

Besonders bevorzugt sind flüssigkristalline Mischungen, die neben den Verbindungen der Formeln I und IA mindestens ein, zwei, drei oder vier Verbindungen aus der Tabelle B enthalten.

### Tabelle C:

| | |
|---|---|
| In der Tabelle C werden mögliche Dotierstoffe angegeben, die in der Regel den erfindungsgemäßen Mischungen zugesetzt werden. | |
| 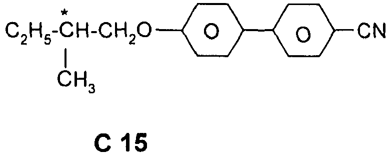 | 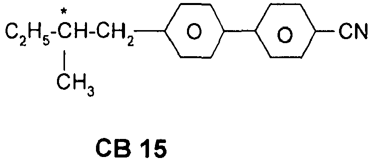 |
| 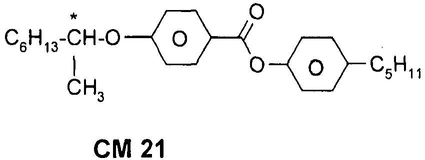 | |
| 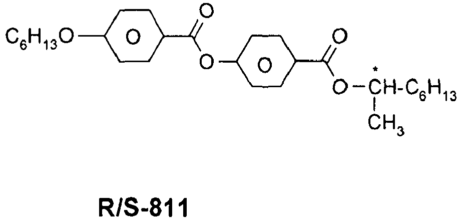 | |
| 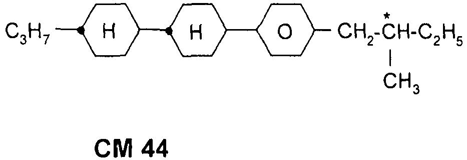 | |
| 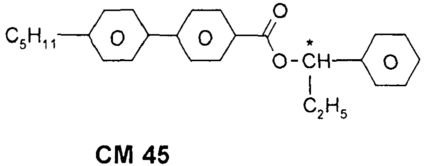 | 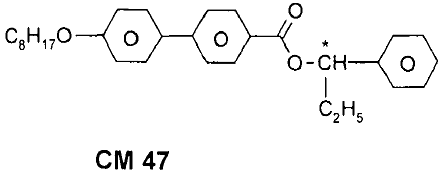 |
| 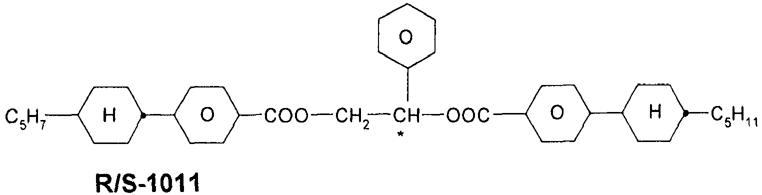 | |
| 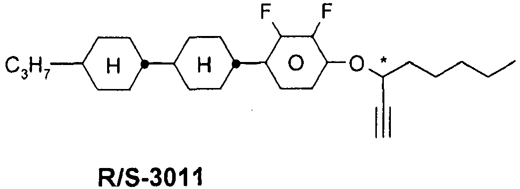 | |
| 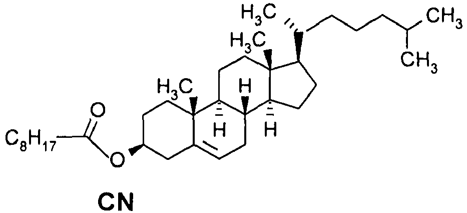 | |
| 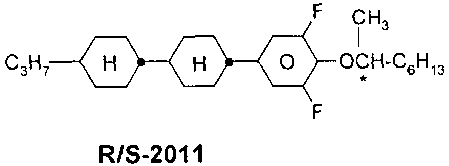 | |

Die folgende Tabelle D zeigt beispielhafte Verbindungen, die als Stabilisatoren in den erfindungsgemäßen Medien verwendet werden können.

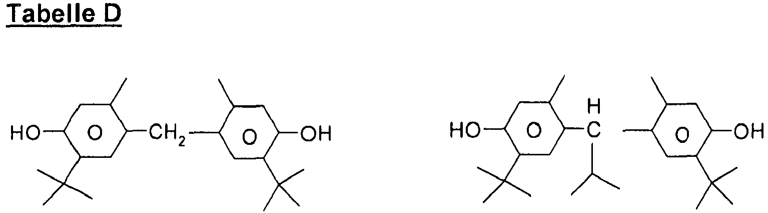

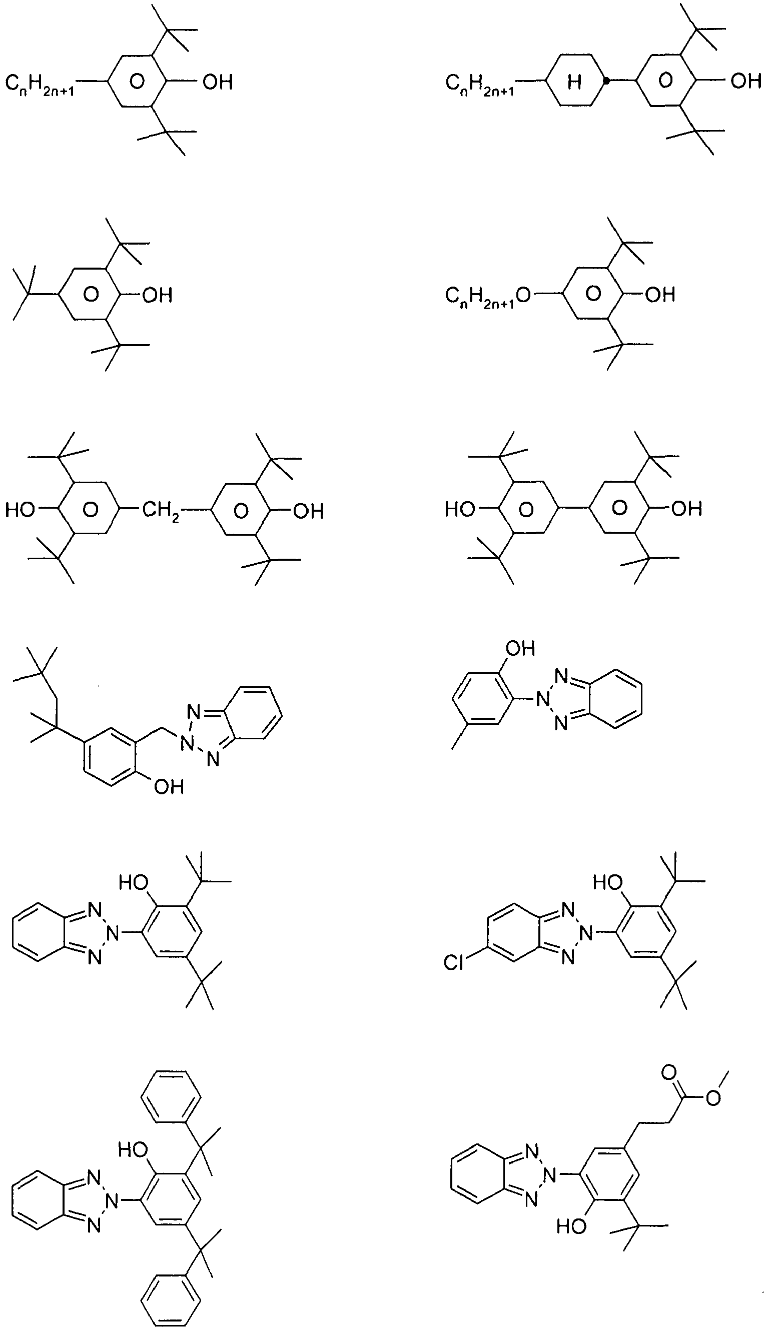

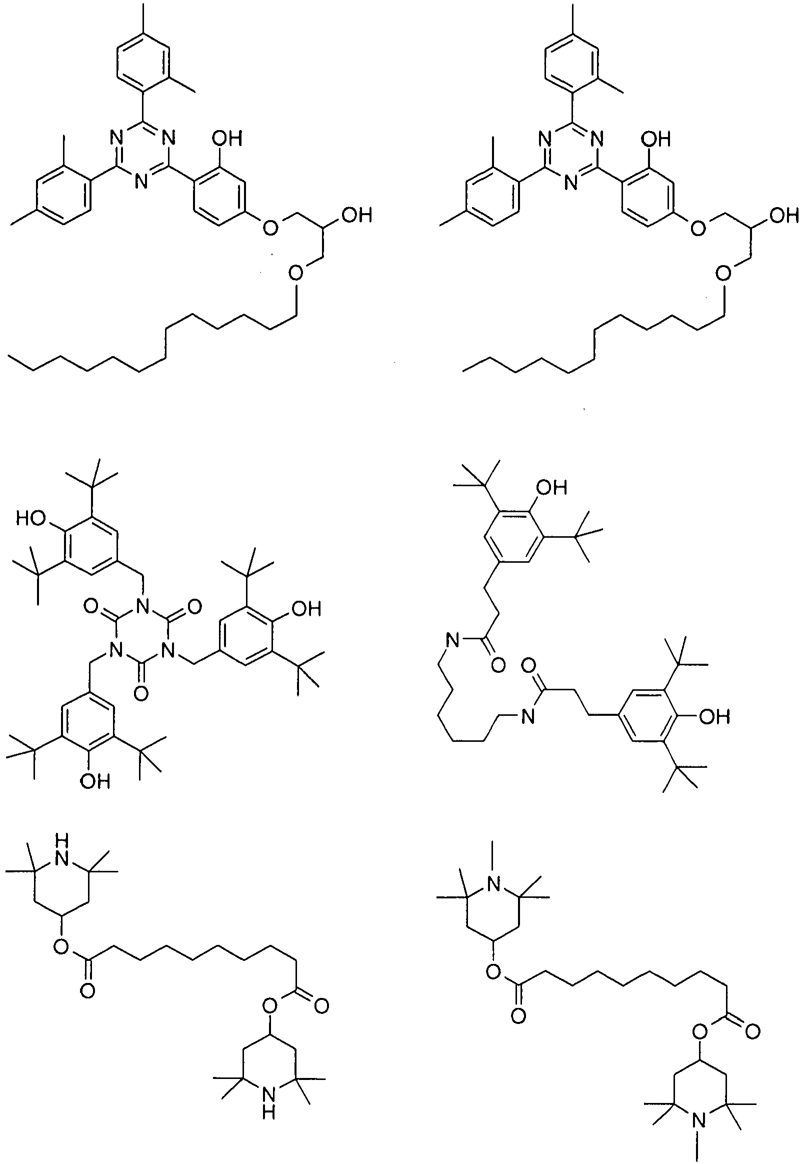

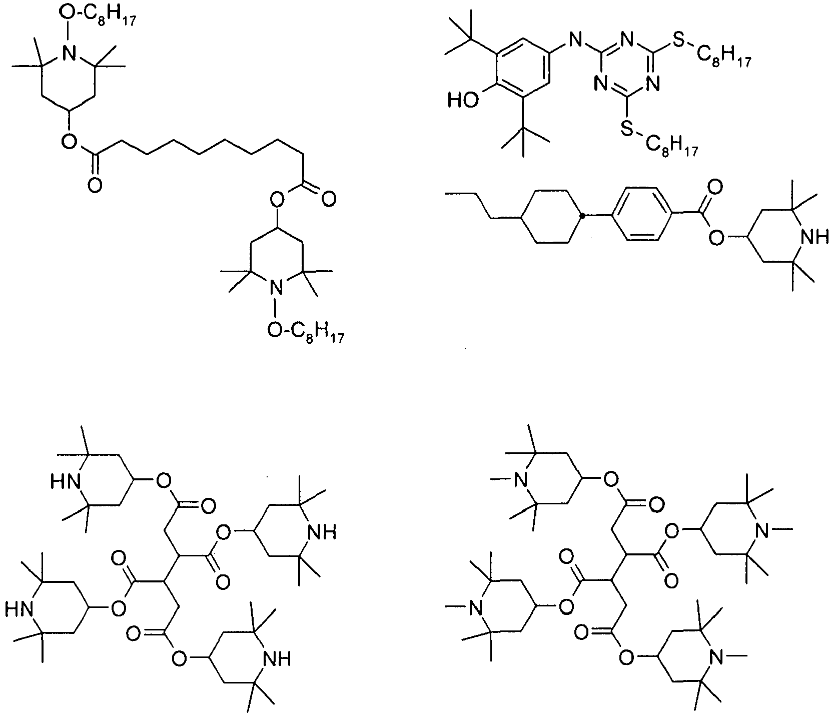

In einer bevorzugten Ausführungsform der vorliegenden Erfindung enthalten die flüssigkristallinen Medien eine oder mehrere Verbindungen der Tabelle D.

Die folgenden Beispiele sollen die Erfindung erläutern, ohne sie zu begrenzen. Vor- und nachstehend bedeuten Prozentangaben Gewichtsprozent. Alle Temperaturen sind in Grad Celsius angegeben. Fp. bedeutet Schmelzpunkt, Kp. = Klärpunkt. Ferner bedeuten K = kristalliner Zustand, N = nematische Phase, S = smektische Phase und I = isotrope Phase. Die Angaben zwischen diesen Symbolen stellen die Übergangstemperaturen dar. Δn bedeutet optische Anisotropie (589 nm, 20 °C), die Fließviskosität v₂₀ (mm²/sec) und die Rotationsviskosität γ₁ (mPa·s) wurden jeweils bei 20 °C bestimmt.

**Beispiel M1**

| | | | |
|---|---|---|---|
| BCH-3F.F | 7,00 % | Klärpunkt [°C]: | 122 |
| BCH-5F.F | 10,00 % | Δn [589 nm, 20 °C]: | 0,0960 |
| CCP-31 | 10,00 % | | |
| CCP-33 | 6,00 % | | |
| CCP-3F.F.F | 10,00 % | | |
| CCP-5F.F.F | 6,00 % | | |
| CBC-53F | 6,00 % | | |
| CCQU-2-F | 15,00 % | | |
| CCQU-3-F | 15,00 % | | |
| CCQU-5-F | 15,00 % | | |

**Beispiel M2**

| | | | |
|---|---|---|---|
| CCQU-2-F | 15,00 % | Klärpunkt [°C]: | 140 |
| CCQU-3-F | 15,00 % | Δn [589 nm, 20 °C]: | 0,0946 |
| CCQU-5-F | 15,00 % | Δε [1 kHz, 20 °C]: | 13,8 |
| CCP-3F.F.F | 12,00 % | γ₁ [mPa·s, 20 °C]: | 332 |
| CCP-5F.F.F | 6,00 % | | |
| CCGU-3-F | 10,00 % | | |
| CCP-3-1 | 10,00 % | | |
| CBC-53F | 6,00 % | | |
| CBC-33F | 3,00 % | | |
| CDUQU-3-F | 8,00 % | | |

**Beispiel M3**

| | | | |
|---|---|---|---|
| PGP-2-4 | 2,00 % | Klärpunkt [°C]: | 123 |
| PGP-2-5 | 2,00 % | Δn [589 nm, 20 °C]: | 0,0955 |
| BCH-5F.F | 7,00 % | | |
| CCP-3F.F.F | 14,00 % | | |
| CCP-5F.F.F | 5,00 % | | |
| CCQU-2-F | 14,00 % | | |
| CCQU-3-F | 16,00 % | | |
| CCQU-5-F | 12,00 % | | |
| CCP-3-1 | 10,00 % | | |
| ECCP-5F.F | 10,00 % | | |
| CBC-33F | 4,00 % | | |
| CBC-53F | 4,00 % | | |

**Beispiel M4**

| | | | |
|---|---|---|---|
| BCH-5F.F | 12,00 % | Klärpunkt [°C]: | 140 |
| BCH-3F.F.F | 5,00 % | Δn [589 nm, 20 °C]: | 0,0946 |
| CCP-31 | 5,00 % | | |
| CCP-33 | 5,00 % | | |
| CCP-3F.F.F | 15,00 % | | |
| CCP-5F.F.F | 7,00 % | | |
| CBC-33F | 4,00 % | | |
| CBC-53F | 4,00 % | | |
| CCQU-2-F | 8,00 % | | |
| CCQU-3-F | 20,00 % | | |
| CCQU-5-F | 15,00 % | | |

**Beispiel M5**

| | | | |
|---|---|---|---|
| BCH-5F.F | 10,00 % | Klärpunkt [°C]: | 140 |
| CCP-3F.F.F | 14,00 % | Δn [589 nm, 20 °C]: | 0,0946 |
| CCP-5F.F.F | 6,00 % | | |
| CCQU-2-F | 14,00 % | | |
| CCQU-3-F | 16,00 % | | |
| CCQU-5-F | 12,00 % | | |
| CCGU-3-F | 7,00 % | | |
| CCP-3-1 | 8,00 % | | |
| ECCP-5F.F | 8,00 % | | |
| CBC-33F | 2,00 % | | |
| CBC-53F | 3,00 % | | |

**Beispiel M6**

| | | | |
|---|---|---|---|
| CCQU-2-F | 8,00 % | Klärpunkt [°C]: | 140 |
| CCQU-3-F | 20,00 % | Δn [589 nm, 20 °C]: | 0,0946 |
| CCQU-5-F | 18,00 % | | |
| CCP-3F.F.F | 8,00 % | | |
| CCP-5F.F.F | 4,00 % | | |
| CCGU-3-F | 10,00 % | | |
| CCP-3-1 | 5,00 % | | |
| CCP-3-3 | 3,00 % | | |
| CCOC-3-3 | 3,00 % | | |
| CCOC-4-3 | 3,00 % | | |
| BCH-3F.F | 8,00 % | | |
| BCH-5F.F | 10,00 % | | |

**Beispiel M7**

| | | | |
|---|---|---|---|
| PGP-2-5 | 2,00 % | Klärpunkt [°C]: | 140 |
| CCGU-3-F | 8,00 % | Δn [589 nm, 20 °C]: | 0,0946 |
| BCH-3F.F | 2,00 % | | |
| BCH-5F.F | 6,00 % | | |
| CCP-3F.F.F | 14,00 % | | |
| CCP-5F.F.F | 6,00 % | | |
| CCQU-2-F | 15,00 % | | |
| CCQU-3-F | 18,00 % | | |
| CCQU-5-F | 12,00 % | | |
| CCP-3-1 | 3,00 % | | |
| CCP-3-3 | 2,00 % | | |
| ECCP-5F.F | 6,00 % | | |
| CBC-33F | 3,00 % | | |
| CBC-53F | 3,00 % | | |

**Beispiel M8**

| | | | |
|---|---|---|---|
| CCQU-2-F | 15,00 % | Klärpunkt [°C]: | 131 |
| CCQU-3-F | 16,00 % | Δn [589 nm, 20 °C]: | 0,0898 |
| CCQU-5-F | 14,00 % | Δε [1 kHz, 20 °C]: | 12,7 |
| CCP-1 F.F.F | 4,00 % | γ₁ [mPa·s, 20 °C]: | 294 |
| CCP-2F.F.F | 7,00 % | | |
| CCP-3F.F.F | 8,00 % | | |
| CCP-5F.F.F | 5,00 % | | |
| CCGU-3-F | 6,00 % | | |
| CCP-3-1 | 8,00 % | | |
| CBC-53F | 7,00 % | | |
| CBC-33F | 4,00 % | | |
| CDUQU-3-F | 6,00 % | | |

**Beispiel M9**

| | | | |
|---|---|---|---|
| CCQU-2-F | 14,00 % | Klärpunkt [°C]: | 130 |
| CCQU-3-F | 16,00 % | Δn [589 nm, 20 °C]: | 0,0814 |
| CCQU-5-F | 15,00 % | Δε [1 kHz, 20 °C]: | 11,0 |
| CCP-2F.F.F | 7,00 % | γ₁ [mPa·s, 20 °C]: | 274 |
| CCP-3F.F.F | 14,00 % | | |
| CCP-5F.F.F | 5,00 % | | |
| CCGU-3-F | 8,00 % | | |
| CCP-3-1 | 8,00 % | | |
| CCOC-3-3 | 3,00 % | | |
| CCOC-4-3 | 4,00 % | | |
| CCCG-3-F | 6,00 % | | |

**Beispiel M10**

| | | | |
|---|---|---|---|
| CCQU-2-F | 14,00 % | Klärpunkt [°C]: | 127,9 |
| CCQU-3-F | 16,00 % | Δn [589 nm, 20 °C]: | 0,0810 |
| CCQU-5-F | 15,00 % | Δε [1 kHz, 20 °C]: | 11,5 |
| CCP-2F.F.F | 7,00 % | γ₁ [mPa·s, 20 °C]: | 275 |
| CCP-3F.F.F | 14,00 % | | |
| CCP-5F.F.F | 5,00 % | | |
| CCGU-3-F | 8,00 % | | |
| CCP-3-1 | 8,00 % | | |
| CCOC-3-3 | 3,00 % | | |
| CCOC-4-3 | 4,00 % | | |
| CCCQU-3-F | 6,00 % | | |

**Beispiel M11**

| | | | |
|---|---|---|---|
| CCQU-2-F | 14,00 % | Klärpunkt [°C]: | 127.9 |
| CCQU-3-F | 16,00 % | Δn [589 nm, 20 °C]: | 0,0810 |
| CCQU-5-F | 15,00 % | Δε [1 kHz, 20 °C]: | 11,6 |
| CCP-2F.F.F | 7,00 % | γ₁ [mPa·s, 20 °C]: | 285 |
| CCP-3F.F.F | 14,00 % | | |
| CCP-5F.F.F | 5,00 % | | |
| CCGU-3-F | 8,00 % | | |
| CCP-3-1 | 8,00 % | | |
| CCOC-3-3 | 3,00 % | | |
| CCOC-4-3 | 4,00 % | | |
| CCCQU-3-OT | 6,00 % | | |

**Beispiel M12**

| | | | |
|---|---|---|---|
| CCQU-2-F | 14,00 % | Klärpunkt [°C]: | 128.8 |
| CCQU-3-F | 16,00 % | Δn [589 nm, 20 °C]: | 0,0796 |
| CCQU-5-F | 15,00 % | | |
| CCP-2F.F.F | 7,00 % | | |
| CCP-3F.F.F | 14,00 % | | |
| CCP-5F.F.F | 5,00 % | | |
| CCGU-3-F | 6,00 % | | |
| CCP-3-1 | 8,00 % | | |
| CCOC-3-3 | 3,00 % | | |
| CCOC-4-3 | 4,00 % | | |
| CCCQU-3-OT | 4,00 % | | |
| CCCQU-3-F | 4,00 % | | |

## Patentansprüche

1. Flüssigkristallines Medium auf der Basis eines Gemisches von polaren Verbindungen mit positiver dielektrischer Anisotropie, **dadurch gekennzeichnet, daß** es eine oder mehrere Verbindungen der Formel I in einer Gesamtkonzentration von ≥40 Gew.-% enthält 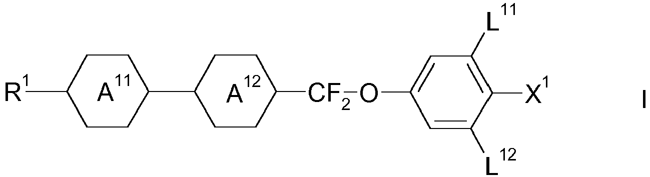 worin
R¹ einen Alkyl- oder Alkoxyrest mit 1 bis 15 C-Atomen, wobei in diesen Resten ein oder mehrere H-Atome duch F ersetzt sein können und auch eine oder mehrere CH₂-Gruppen jeweils unabhängig voneinander durch 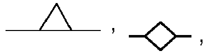 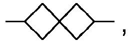 -C≡C-, -CH=CH-, -O-, -CO-O- oder -O-CO- so ersetzt sein können, daß O-Atome nicht direkt miteinander verknüpft sind, 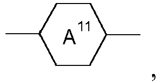 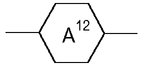 bei jedem Auftreten gleich oder verschieden 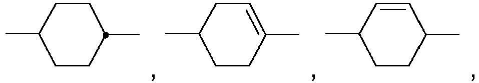 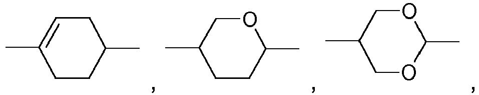 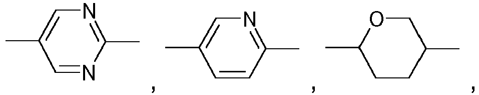 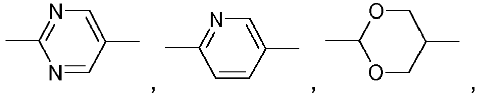 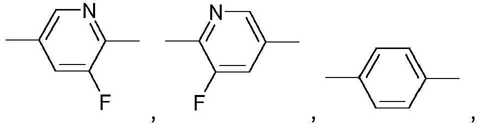 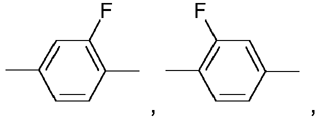 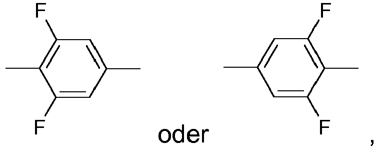
L¹¹ und L¹² unabhängig voneinander H oder F,
X¹ F, Cl, CN, halogenierter Alkylrest, halogenierter Alkenylrest, halogenierter Alkoxyrest oder halogenierter Alkenyloxyrest mit bis zu 6 C-Atomen,
bedeuten,
ferner **gekennzeichnet durch** einen Klärpunkt von größer 120°C.

2. Medium nach Anspruch 1, **dadurch gekennzeichnet, daß** es eine oder mehrere Verbindungen ausgewählt aus der Gruppe der Verbindungen I-1 bis I-5 enthält, 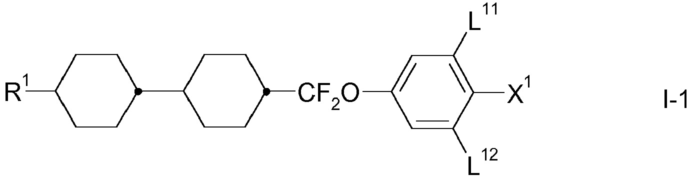 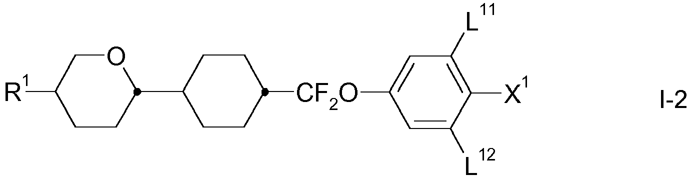 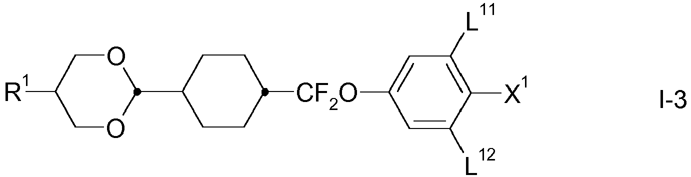 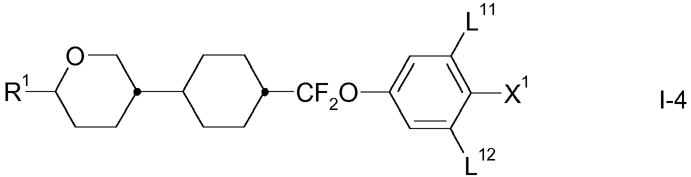 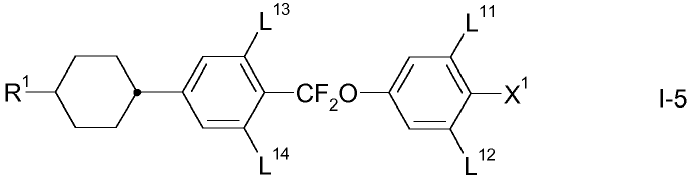 worin die Parameter die in Anspruch 1 angegebene Bedeutung haben und L¹³ und L¹⁴ unabhängig voneinander H oder F bedeuten.

3. Medium nach Anspruch 1 oder 2, **dadurch gekennzeichnet, daß** es eine oder mehrere Verbindungen der Formel II enthält 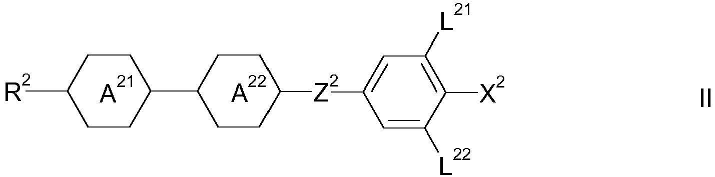 worin
R² einen Alkyl- oder Alkoxyrest mit 1 bis 15 C-Atomen, wobei in diesen Resten ein oder mehrere H-Atome durch F ersetzt sein können und auch eine oder mehrere CH₂-Gruppen jeweils unabhängig voneinander durch 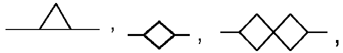 -C≡C-, -CH=CH-,-O-, -CO-O- oder -O-CO- so ersetzt sein können, daß O-Atome nicht direkt miteinander verknüpft sind, 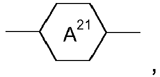 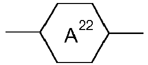 bei jedem Auftreten gleich oder verschieden 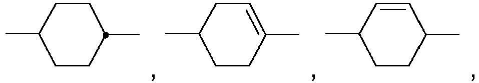 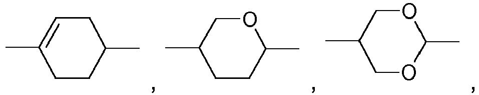 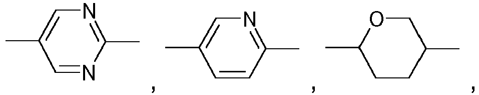 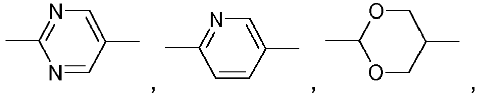 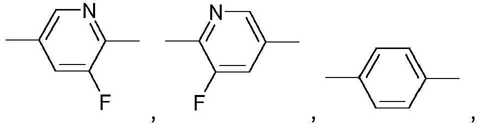 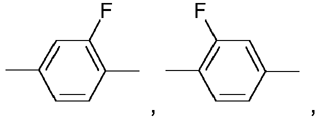 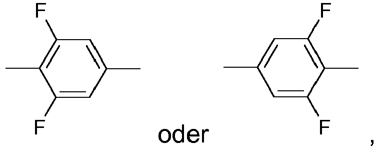
L²¹ und L²² unabhängig voneinander H oder F,
X² F, Cl, CN, halogenierter Alkylrest, halogenierter Alkenylrest, halogenierter Alkoxyrest oder halogenierter Alkenyloxyrest mit bis zu 6 C-Atomen,
Z² -CH₂CH₂-, -CF₂CF₂-, -COO-, *trans*-CH=CH-, *trans*-CF=CF-, -CH₂O- oder eine Einfachbindung,
bedeuten.

4. Medium nach Anspruch 3, **dadurch gekennzeichnet, daß** die Verbindungen der Formel II ausgewählt sind aus der Gruppe der Verbindungen II-1 bis II-14 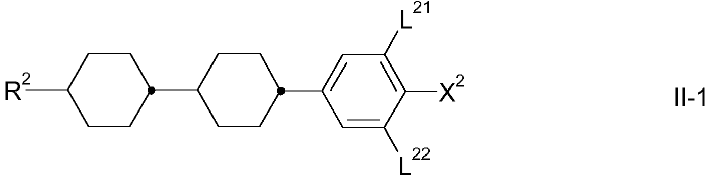 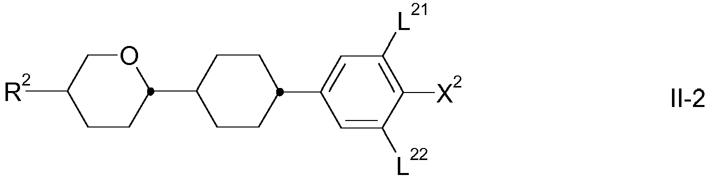 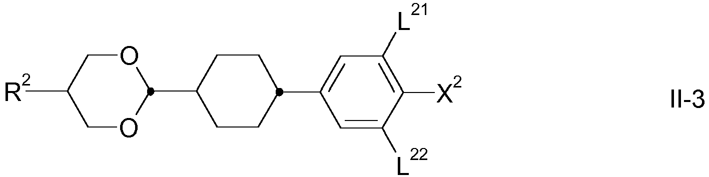 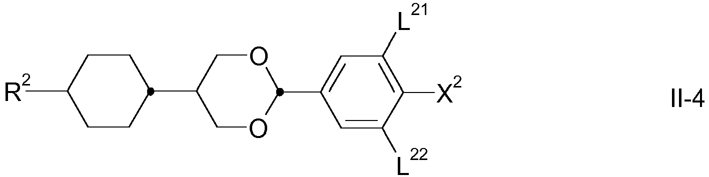 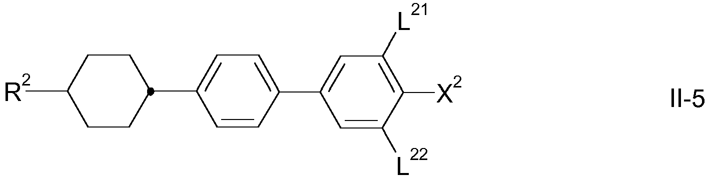 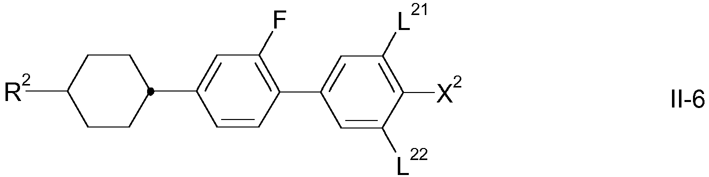 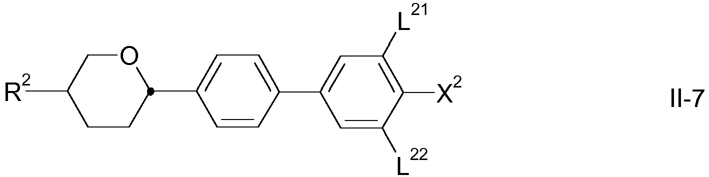 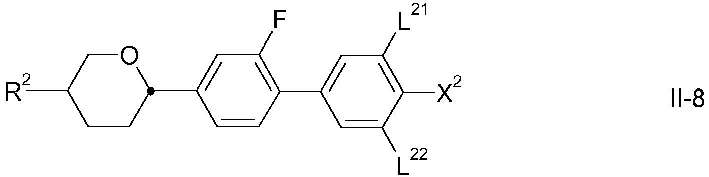 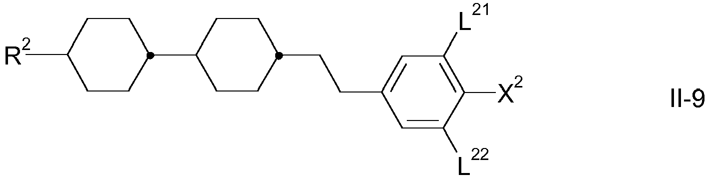 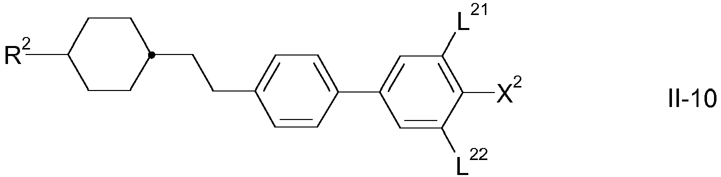 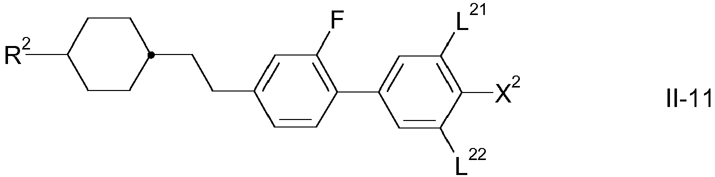 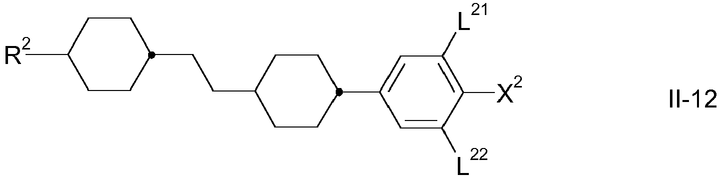 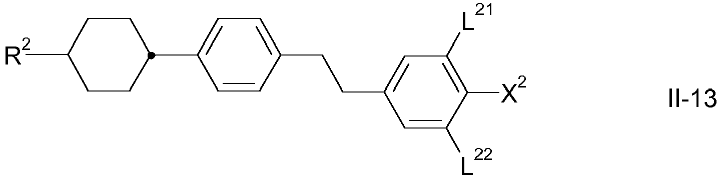 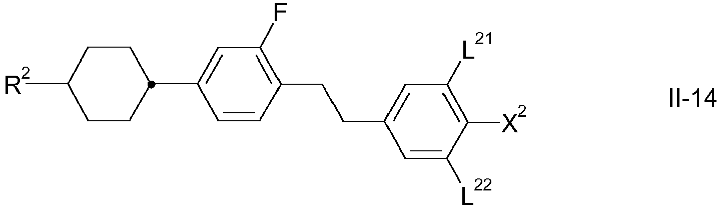 worin
R² n-Alkyl mit bis zu 7 C-Atomen,
L²¹ und L²² unabhängig voneinander H oder F und
X² F, Cl, halogeniertes Alkyl oder halogeniertes Alkoxy mit bis zu 6 C-Atomen
bedeuten.

5. Medium nach Anspruch 3 oder 4, **dadurch gekennzeichnet, daß** die Gesamtkonzentration der Verbindungen der Formel II 18% bis 50% beträgt.

6. Medium nach einem oder mehreren der Ansprüche 1 bis 5, **dadurch gekennzeichnet, daß** es zusätzlich eine oder mehrere Verbindungen ausgewählt aus der Gruppe der Verbindungen der Formeln IA und IB enthält, 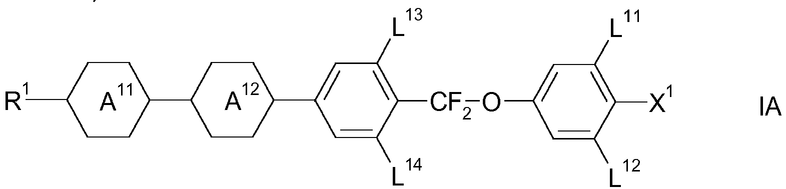 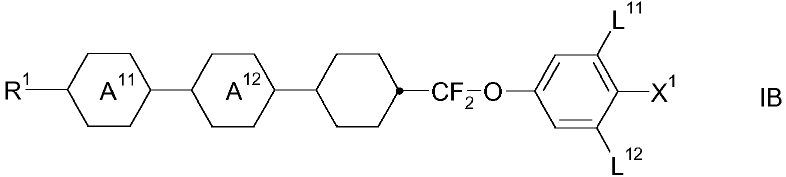 worin R¹, A¹¹, A¹², L¹¹, L¹², und X¹ die in Anspruch 1 angegebene Bedeutung haben und L¹³ und L¹⁴ die für L¹¹ angegebene Bedeutung haben.

7. Medium nach einem oder mehreren der Ansprüche 1 bis 6, **dadurch gekennzeichnet, daß** es zusätzlich eine oder mehrere Verbindungen der Formel III enthält, 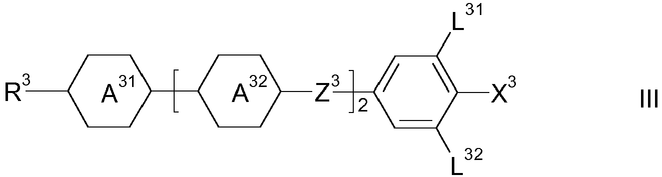 worin
R³ die in Anspruch 3 für R² angegebene Bedeutung hat, 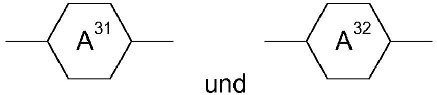 bei jedem Auftreten unabhängig voneinander 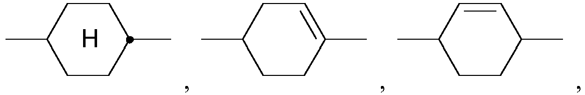 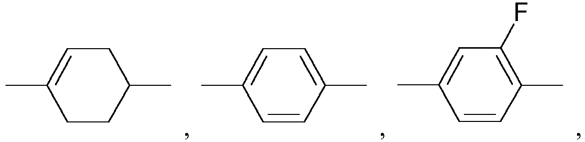 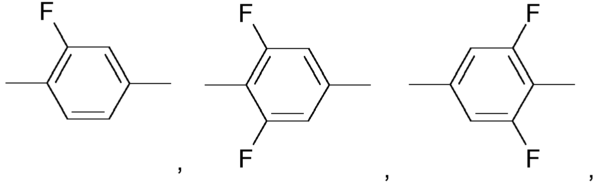 oder 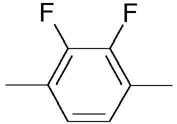 bedeuten, und
Z³ bei jedem Auftreten unabhängig voneinander -CH₂CH₂-, -COO-, *trans-* -CH=CH-, *trans-* -CF=CF-, -CH₂O-, -C=C- oder eine Einfachbindung,
L³¹, L³² H oder F,
X³ F, Cl, CN, halogenierter Alkylrest, halogenierter Alkenylrest, halogenierter Alkoxyrest oder halogenierter Alkenyloxyrest mit bis zu 6 C-Atomen
bedeuten.

8. Medium nach Anspruch 7, **dadurch gekennzeichnet, daß** die eine oder mehrere Verbindungen der Formel III ausgewählt sind aus den Verbindungen der Formeln III-1 bis III-9 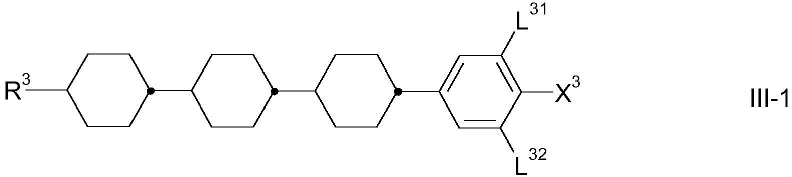 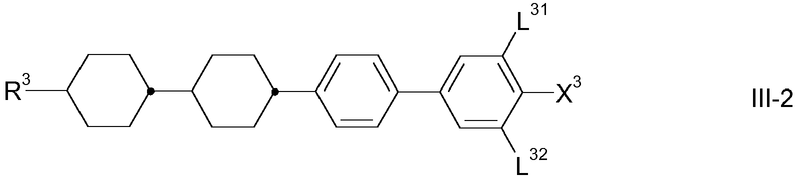 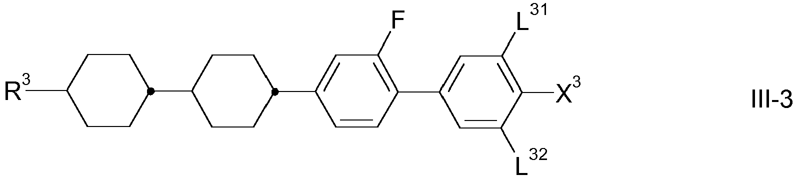 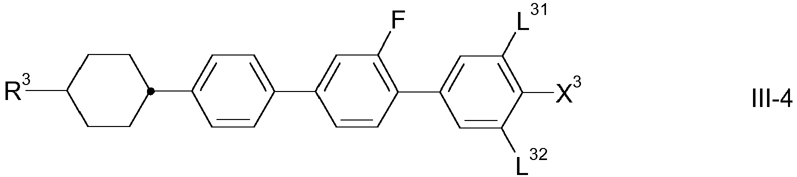 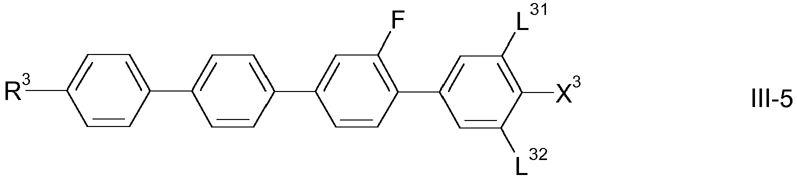 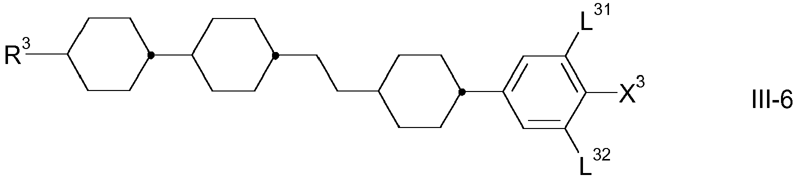 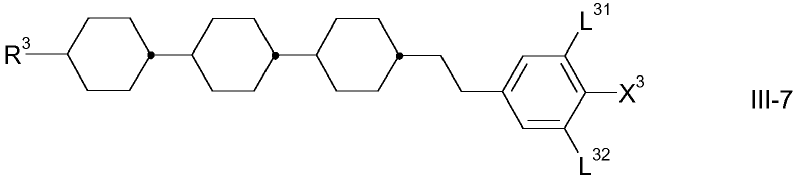 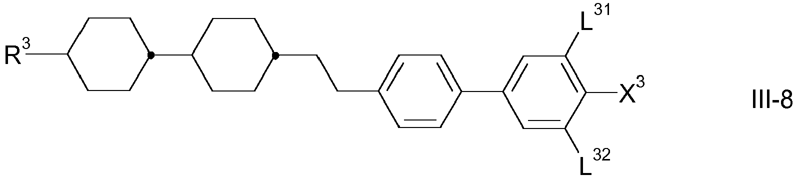 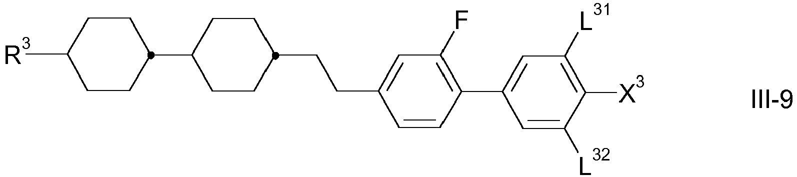 worin
R³, L³¹ und L³² die in Anspruch 6 angegebene Bedeutung haben und
X³ F, Cl, halogeniertes Alkyl oder halogeniertes Alkoxy mit bis zu 6 C-Atomen
bedeuten.

9. Verwendung des flüssigkristallinen Mediums nach einem oder mehreren der Ansprüche 1 bis 8 für elektrooptische Zwecke.

10. Verwendung nach Anspruch 9 in Flüssigkristallichtventilen für Beleuchtungseinrichtungen für Kraftfahrzeuge oder in Flüssigkristallanzeigen.

11. Elektrooptisches Bauelement enthaltend ein flüssigkristallines Medium nach einem oder mehreren der Ansprüche 1 bis 8.

12. Elektrooptisches Bauelement nach Anspruch 11, wobei das Bauelement ein Flüssigkristallichtventil ist.

13. Beleuchtungseinrichtung für Kraftfahrzeuge enthaltend ein Flüssigkristallichtventil nach Anspruch 12.

14. Flüssigkristallanzeige enthaltend ein Flüssigkristallichtventil nach Anspruch 12.

## Claims

1. Liquid-crystalline medium based on a mixture of polar compounds having positive dielectric anisotropy, **characterised in that** it comprises one or more compounds of the formula I in a total concentration of ≥ 40%, 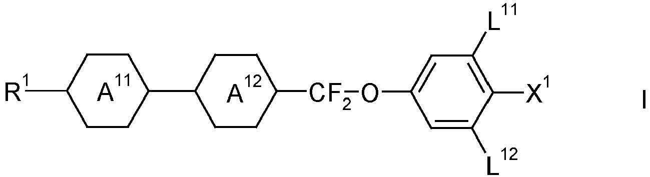 in which
R¹ denotes an alkyl or alkoxy radical having 1 to 15 C atoms, where one or more H atoms in these radicals may be replaced by F and, in addition, one or more CH₂ groups may in each case be replaced, independently of one another, by 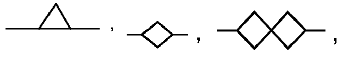 -C≡C-, -CH=CH-, -O-, -CO-O- or -O-CO- in such a way that O atoms are not linked directly to one another, 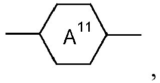 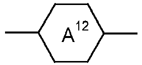 on each occurrence, identically or differently, denote 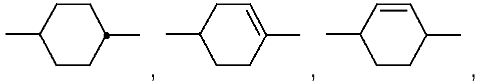 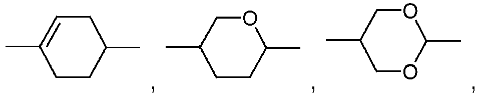 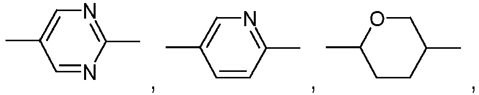 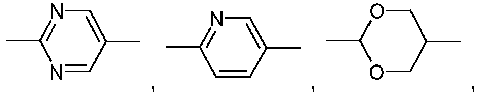 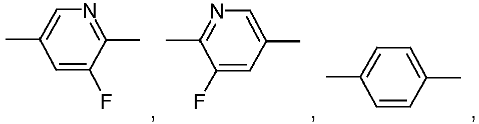 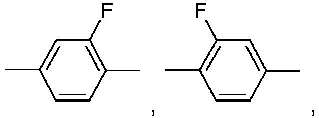 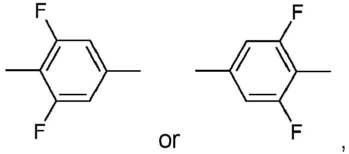
L¹¹ and L¹², independently of one another, denote H or F,
X¹ denotes F, Cl, CN, a halogenated alkyl radical, a halo-genated alkenyl radical, a halogenated alkoxy radical or a halogenated alkenyloxy radical having up to 6 C atoms,
further **characterised by** a clearing point of greater than 120°C.

2. Medium according to Claim 1, **characterised in that** it comprises one or more compounds selected from the group of the compounds of the formulae I-1 to I-5, 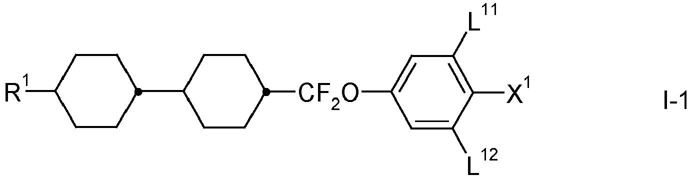 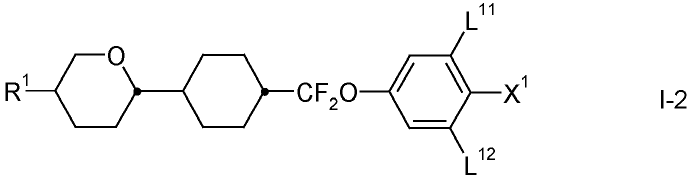 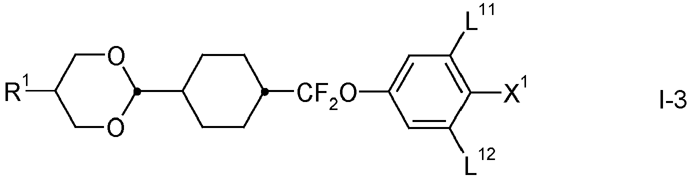 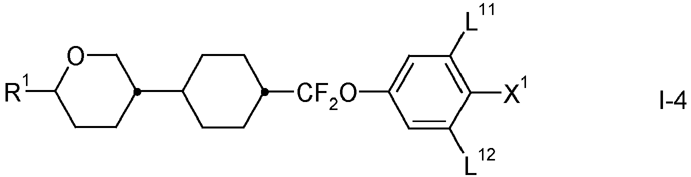 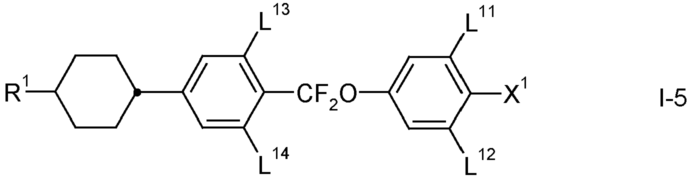 in which the parameters have the meanings indicated in Claim 1 and L¹³ and L¹⁴, independently of one another, denote H or F.

3. Medium according to Claim 1 or 2, **characterised in that** it comprises one or more compounds of the formula II 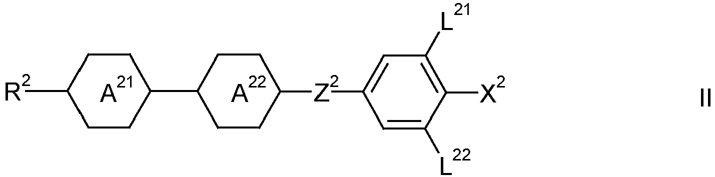 in which
R² denotes an alkyl or alkoxy radical having 1 to 15 C atoms, where one or more H atoms in these radicals may be replaced by F and, in addition, one or more CH₂ groups may in each case be replaced, independently of one another, by 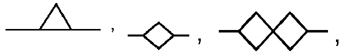 -C≡C-, -CH=CH-, -O-, -CO-O- or -O-CO- in such a way that O atoms are not linked directly to one another, 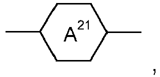 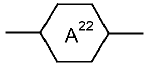 on each occurrence, identically or differently, denote 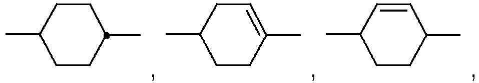 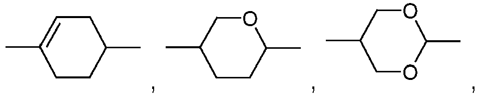 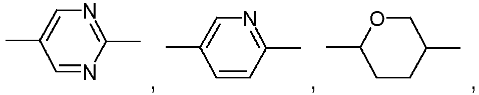 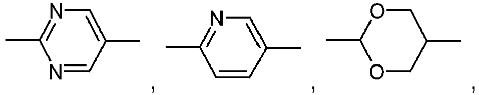 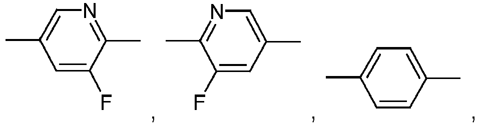 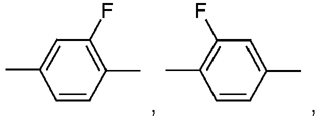 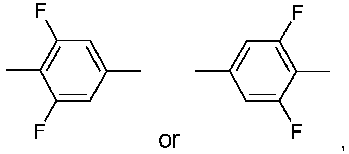
L²¹ and L²², independently of one another, denote H or F,
X² denotes F, Cl, CN, a halogenated alkyl radical, a halo-genated alkenyl radical, a halogenated alkoxy radical or a halogenated alkenyloxy radical having up to 6 C atoms,
Z² denotes -CH₂CH₂-, -CF₂CF₂-, -COO-, *trans* -CH=CH-, *trans* -CF=CF-, -CH₂O- or a single bond.

4. Medium according to Claim 3, **characterised in that** the compounds of the formula II are selected from the group of the compounds of the formulae II-1 to II-14, 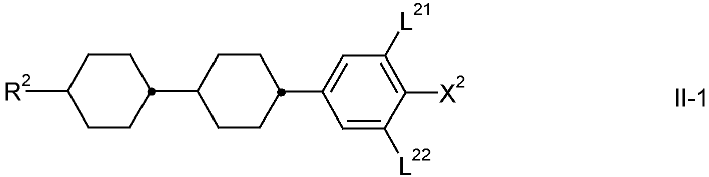 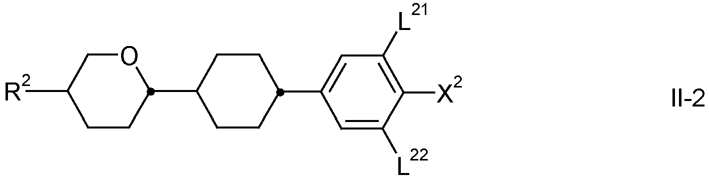 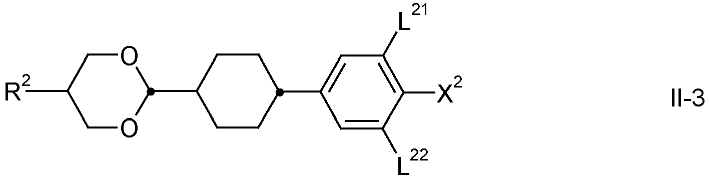 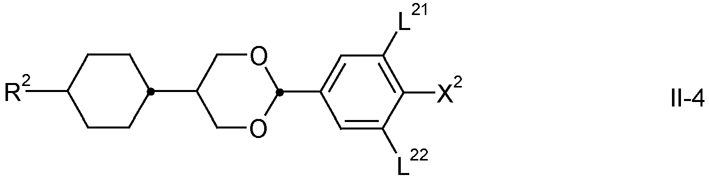 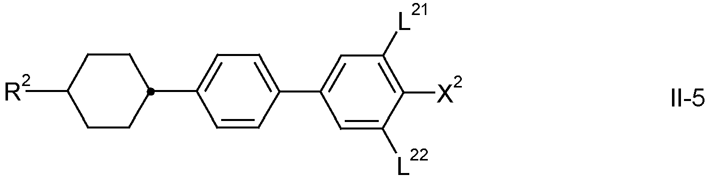 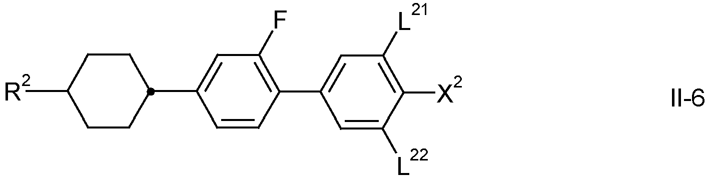 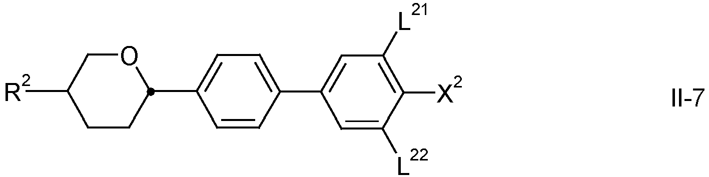 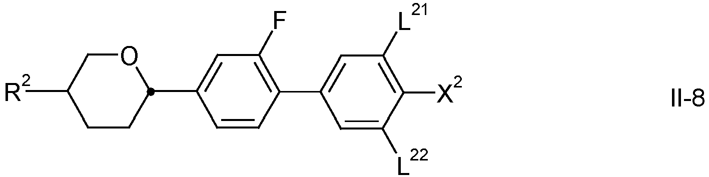 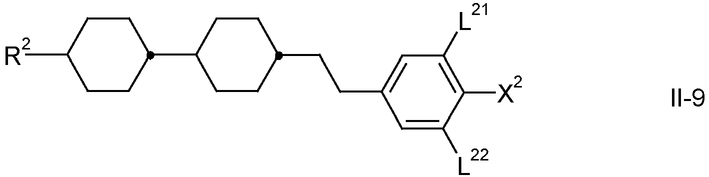 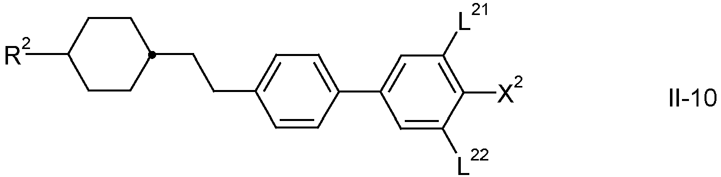 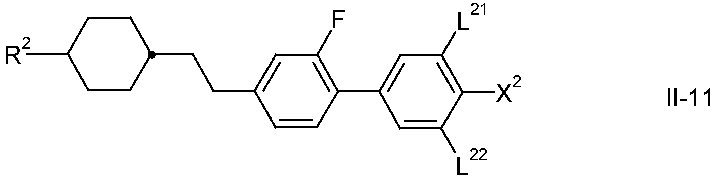 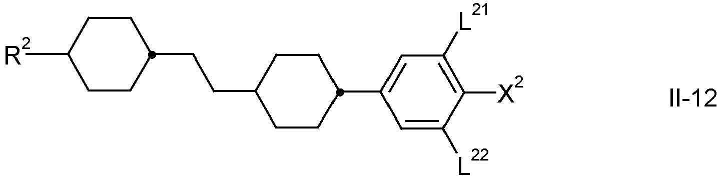 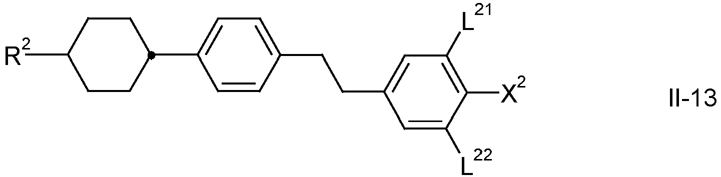 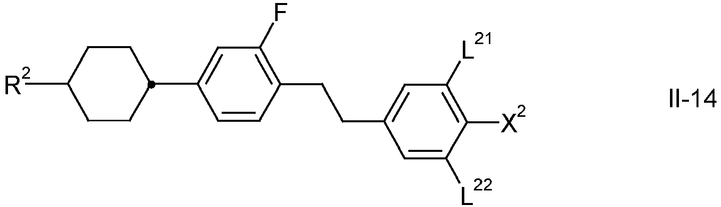 in which
R² denotes n-alkyl having up to 7 C atoms,
L²¹ and L²², independently of one another, denote H or F and
X² denotes F, Cl, halogenated alkyl or halogenated alkoxy having up to 6 C atoms.

5. Medium according to Claim 3 on 4, **characterised in that** the total concentration of the compounds of the formula II is 18% to 50%.

6. Medium according to one or more of Claims 1 to 5, **characterised in that** it additionally comprises one or more compounds selected from the group of the compounds of the formulae IA and IB, 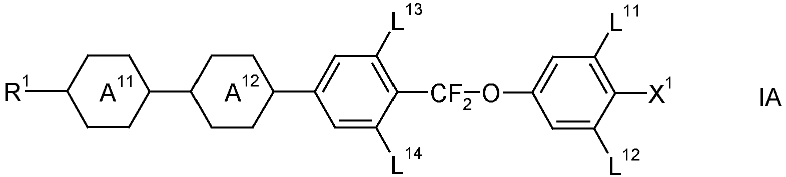 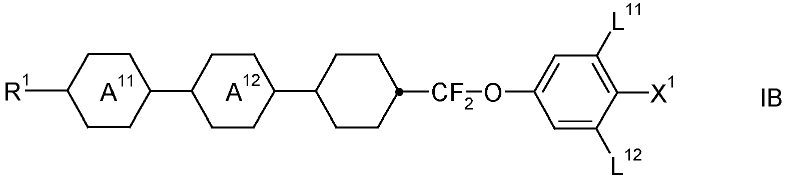 in which R¹, A¹¹, A¹², L¹¹, L¹² and X¹ have the meanings indicated in Claim 1 and L¹³ and L¹⁴ have the meaning indicated for L¹¹.

7. Medium according to one or more of Claims 1 to 6, **characterised in that** it additionally comprises one or more compounds of the formula III, 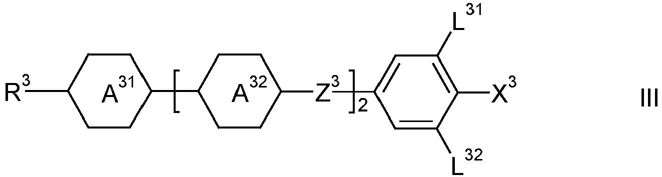 in which
R³ has the meaning indicated for R² in Claim 3, 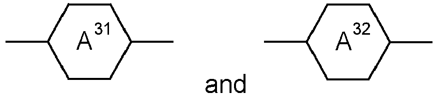 on each occurrence, independently of one another, denote 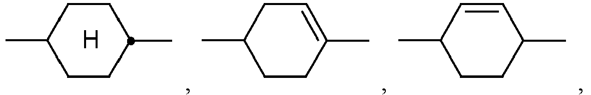 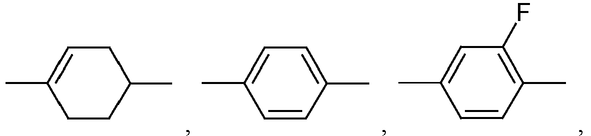 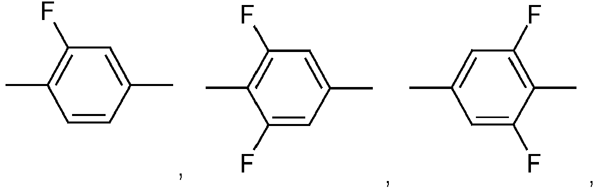 or 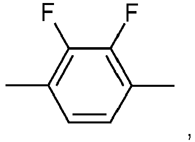 and
Z³ on each occurrence, independently of one another, denotes -CH₂CH₂-, -COO-, *trans* -CH=CH-, *trans* -CF=CF-, -CH₂O-, -C=C- or a single bond,
L³¹, L³² denote H or F,
X³ denotes F, Cl, CN, a halogenated alkyl radical, a halo-genated alkenyl radical, a halogenated alkoxy radical or a halogenated alkenyloxy radical having up to 6 C atoms.

8. Medium according to Claim 7, **characterised in that** the one or more compounds of the formula III are selected from the compounds of the formulae III-1 to III-9, 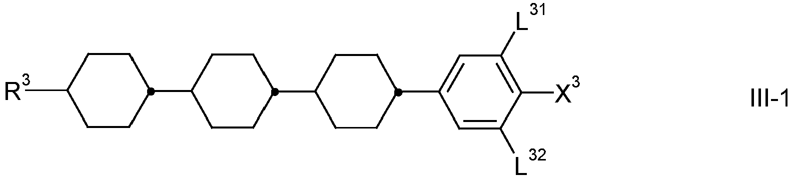 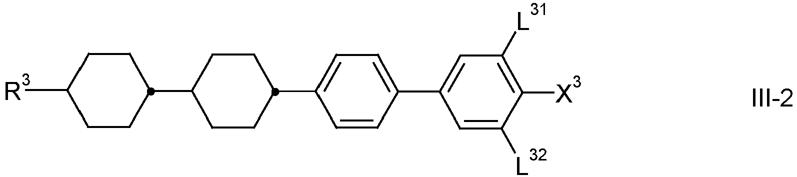 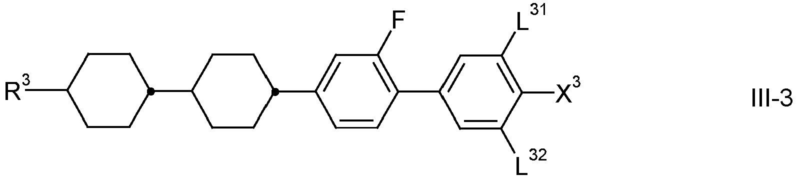 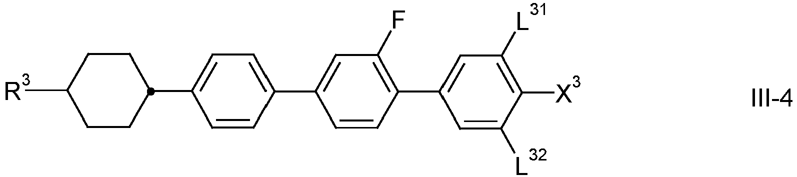 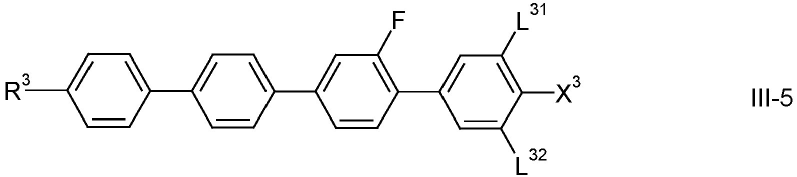 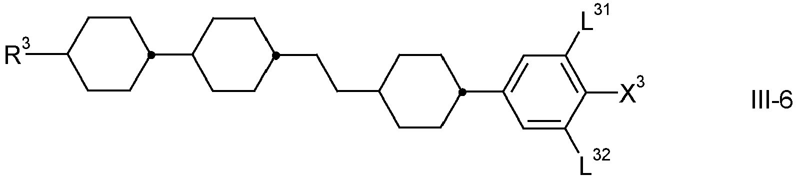 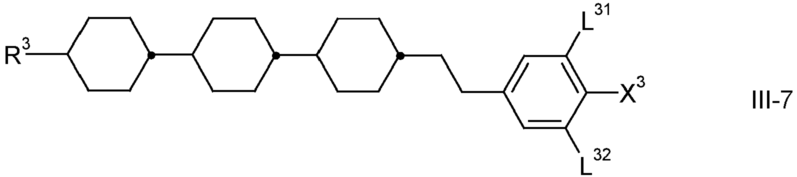 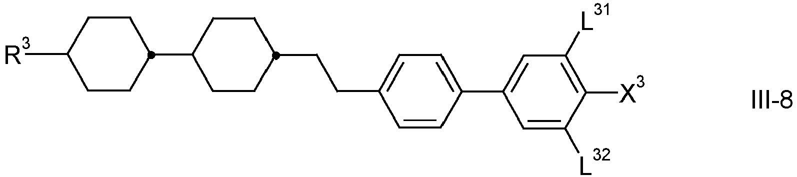 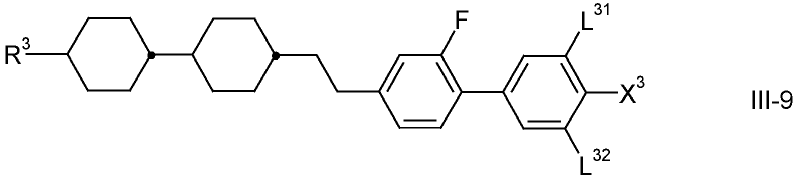 in which
R³, L³¹ and L³² have the meanings indicated in Claim 6 and
X³ denotes F, Cl, halogenated alkyl or halogenated alkoxy having to 6 C atoms.

9. Use of the liquid-crystalline medium according to one or more of Claims 1 to 8 for electro-optical purposes.

10. Use according to Claim 9 in liquid-crystal light valves for lighting devices for motor vehicles or in liquid-crystal displays.

11. Electro-optical component containing a liquid-crystalline medium according to one or more of Claims 1 to 8.

12. Electro-optical component according to Claim 11, where the component is a liquid-crystal light valve.

13. Lighting device for motor vehicles containing a liquid-crystal light valve according to Claim 12.

14. Liquid-crystal display containing a liquid-crystal light valve according to Claim 12.

## Revendications

1. Milieu cristallin liquide basé sur un mélange de composés polaires qui présentent une anisotropie diélectrique positive, **caractérisé en ce qu'**il comprend un ou plusieurs composé(s) de la formule I selon une concentration totale ≥ 40 %, 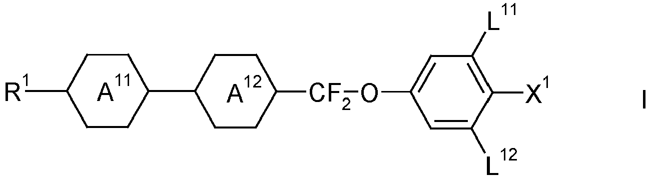 dans laquelle
R¹ représente un radical alkyle ou alcoxy qui comporte de 1 à 15 atome(s) de C, où un ou plusieurs atome(s) de H dans ces radicaux peut/peuvent être remplacé(s) par F et, en outre, un ou plusieurs groupe(s) CH₂ peut/peuvent dans chaque cas être remplacé(s), de manière indépendante les uns des autres, par 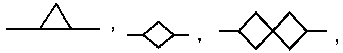 -C≡C-, -CH=CH-, -O-, -CO-O- ou -O-CO- de telle sorte que des atomes de O ne soient pas liés directement les uns aux autres, 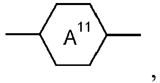 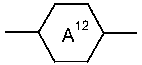 représentent pour chaque occurrence, de manière identique ou différente, 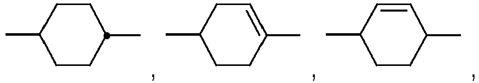 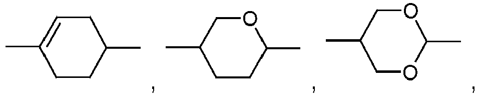 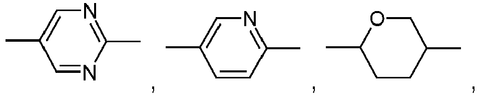 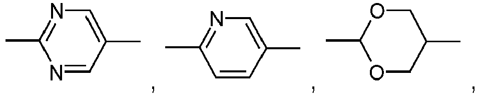 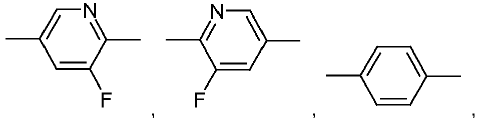 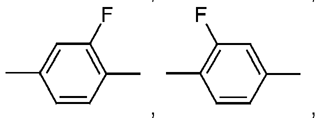 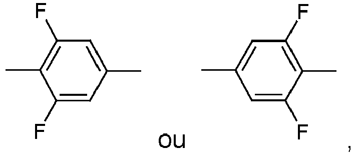
L¹¹ et L¹² représentent, de manière indépendante l'un de l'autre, H ou F,
X¹ représente F, Cl, CN, un radical alkyle halogéné, un radical alkényle halogéné, un radical alcoxy halogéné ou un radical alkényloxy halogéné qui comporte jusqu'à 6 atomes de C,
**caractérisé en outre par** un point de clarification supérieur à 120 °C.

2. Milieu selon la revendication 1, **caractérisé en ce qu'**il comprend un ou plusieurs composé(s) qui est/sont sélectionné(s) parmi le groupe des composés des formules I-1 à I-5, 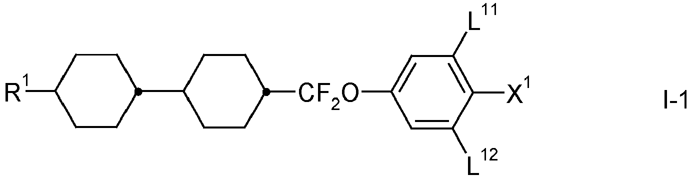 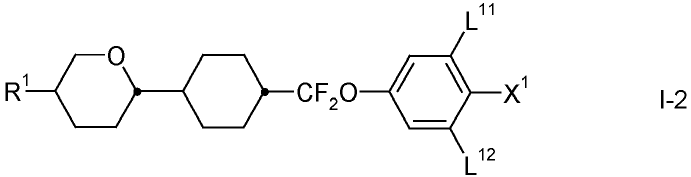 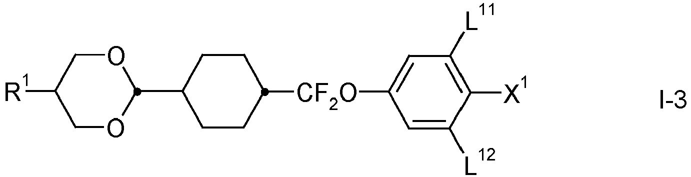 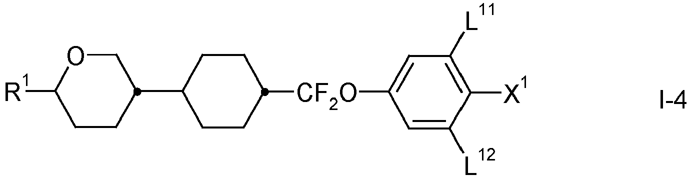 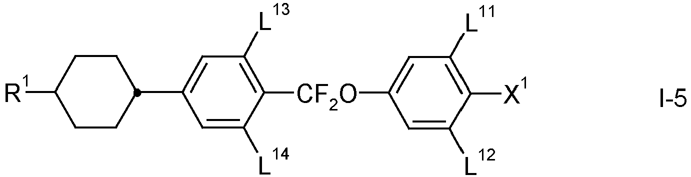 dans lesquelles les paramètres présentent les significations qui ont été indiquées selon la revendication 1 et L¹³ et L¹⁴ représentent, de manière indépendante l'un de l'autre, H ou F.

3. Milieu selon la revendication 1 ou 2, **caractérisé en ce qu'**il comprend un ou plusieurs composé(s) de la formule II 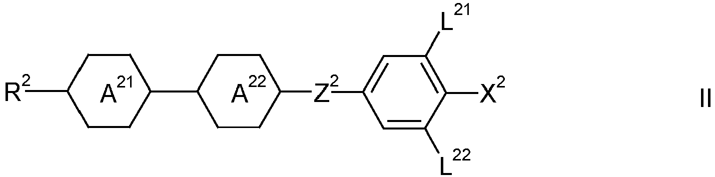 dans laquelle
R² représente un radical alkyle ou alcoxy qui comporte de 1 à 15 atome(s) de C, où un ou plusieurs atome(s) de H dans ces radicaux peut/peuvent être remplacé(s) par F et, en outre, un ou plusieurs groupe(s) CH₂ peut/peuvent dans chaque cas être remplacé(s), de manière indépendante les uns des autres, par 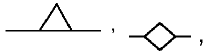 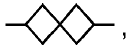 -C≡C-, -CH=CH-, -O-, -CO-O- ou -O-CO- de telle sorte que des atomes de O ne soient pas liés di-rectement les uns aux autres, 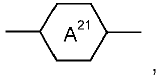 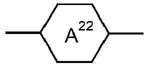 représentent pour chaque occurrence, de manière identique ou différente, 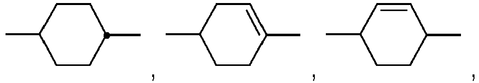 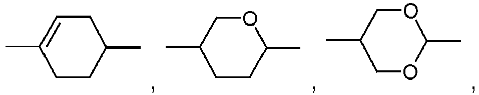 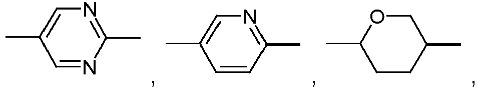 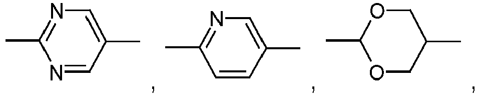 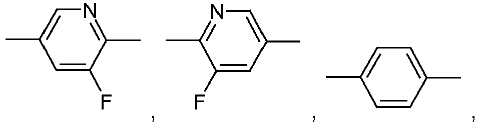 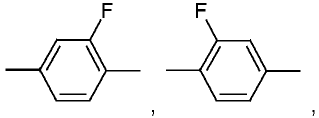 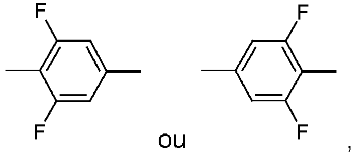
L²¹ et L²² représentent, de manière indépendante l'un de l'autre, H ou F,
X² représente F, Cl, CN, un radical alkyle halogéné, un radical alkényle halogéné, un radical alcoxy halogéné ou un radical alkényloxy halogéné qui comporte jusqu'à 6 atomes de C,
Z² représente -CH₂CH₂-, -CF₂CF₂-, -COO-, *trans* -CH=CH-, *trans* -CF=CF-, -CH₂O- ou une liaison simple.

4. Milieu selon la revendication 3, **caractérisé en ce que** les composés de la formule II sont sélectionnés parmi le groupe des composés des formules II-1 à II-14, 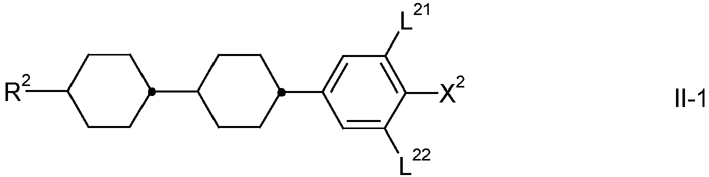 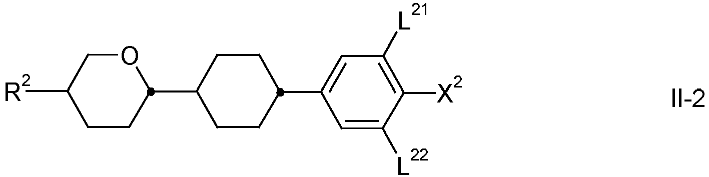 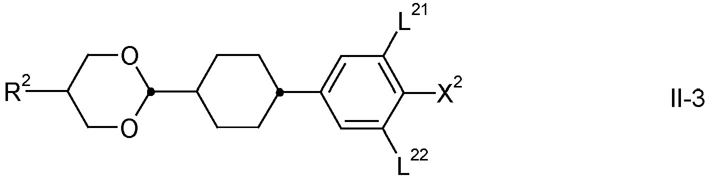 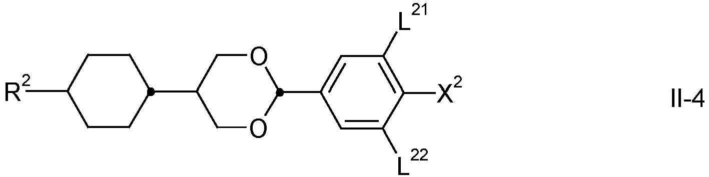 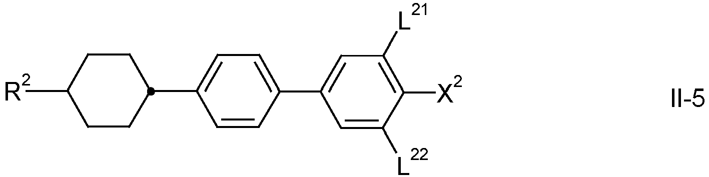 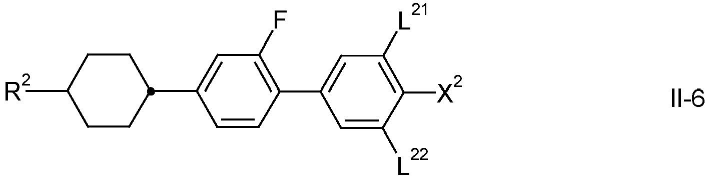 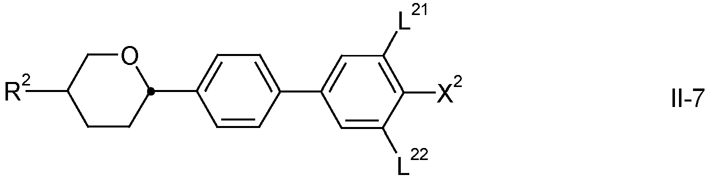 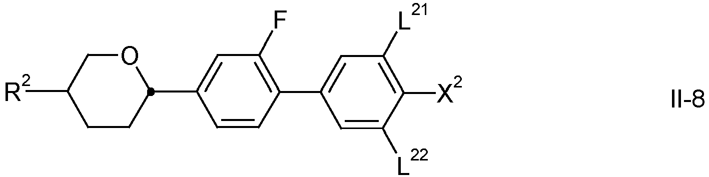 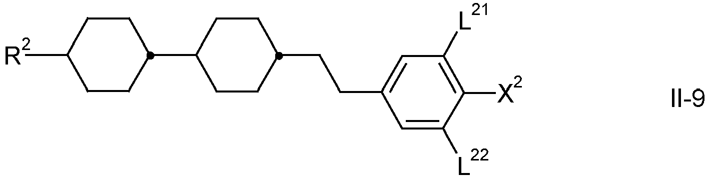 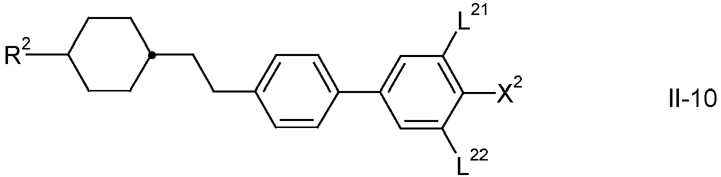 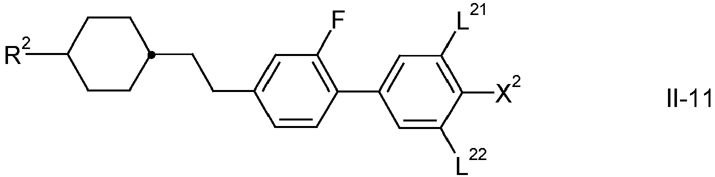 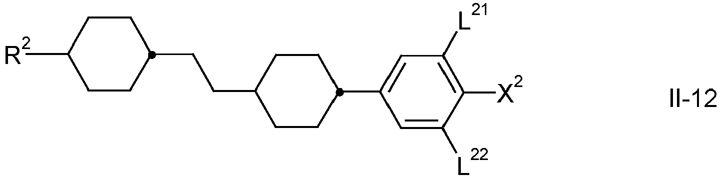 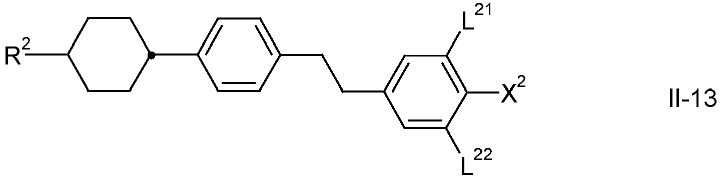 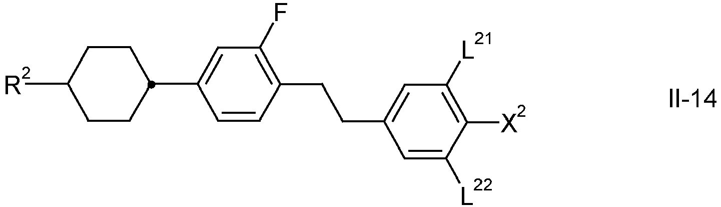 dans lesquelles
R² représente n-alkyle qui comporte jusqu'à 7 atomes de
C, L²¹ et L²² représentent, de manière indépendante l'un de l'autre, H ou F et
X² représente F, Cl, alkyle halogéné ou alcoxy halogéné qui comporte jusqu'à 6 atomes de C.

5. Milieu selon la revendication 3 ou 4, **caractérisé en ce que** la concentration totale des composés de la formule II va de 18 % à 50 %.

6. Milieu selon une ou plusieurs des revendications 1 à 5, **caractérisé en ce qu'**il comprend de façon additionnelle un ou plusieurs composé(s) qui est/sont sélectionné(s) parmi le groupe des composés des formules IA et IB, 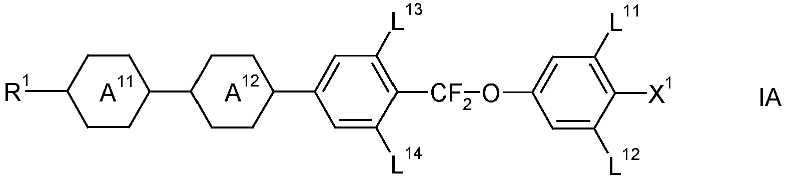 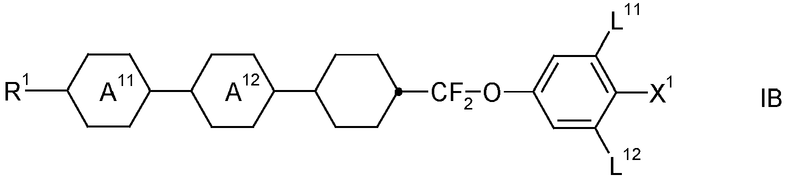 dans lesquelles R¹, A¹¹, A¹², L¹¹, L¹² et X¹ présentent les significations qui ont été indiquées selon la revendication 1 et L¹³ et L¹⁴ présentent la signification qui a été indiquée pour L¹¹.

7. Milieu selon une ou plusieurs des revendications 1 à 6, **caractérisé en ce qu'**il comprend de façon additionnelle un ou plusieurs composé(s) de la formule III, 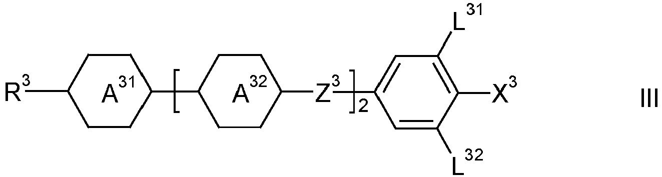 dans laquelle
R³ présente la signification qui a été indiquée pour R² selon la revendication 3, 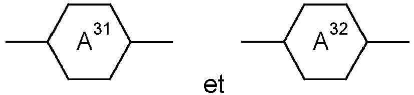 représentent pour chaque occurrence, de manière indépendante l'un de l'autre, 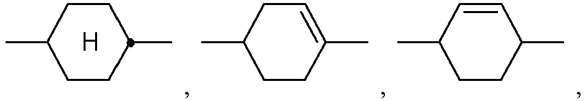 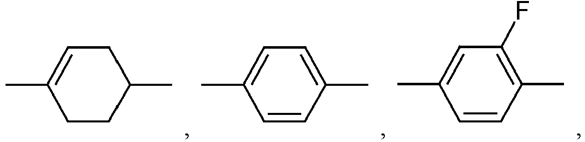 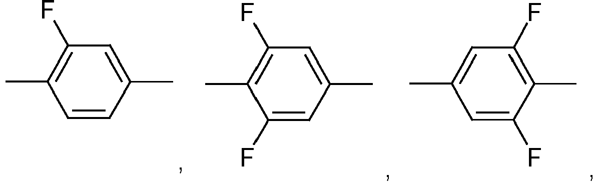 ou 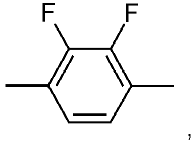 et
Z³ représente pour chaque occurrence, de manière indépendante les unes des autres, -CH₂CH₂-, -COO-, *trans* -CH=CH-, *trans* -CF=CF-, -CH₂O-, -C=C- ou une liaison simple,
L³¹, L³² représente H ou F,
X³ représente F, Cl, CN, un radical alkyle halogéné, un radical alkényle halogéné, un radical alcoxy halogéné ou un radical alkényloxy halogéné qui comporte jusqu'à 6 atomes de C.

8. Milieu selon la revendication 7, **caractérisé en ce que** les un ou plusieurs composés de la formule III sont sélectionnés parmi les composés des formules III-1 à III-9, 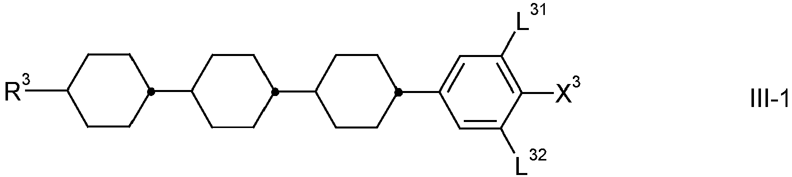 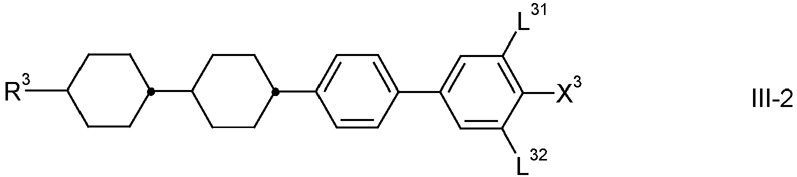 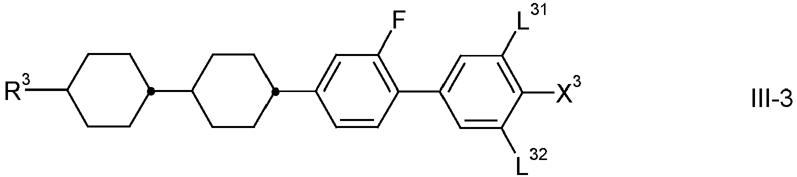 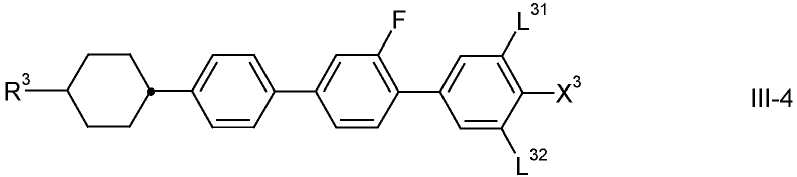 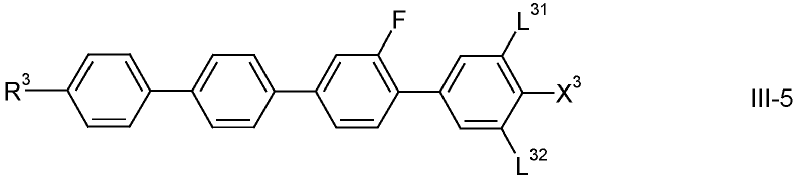 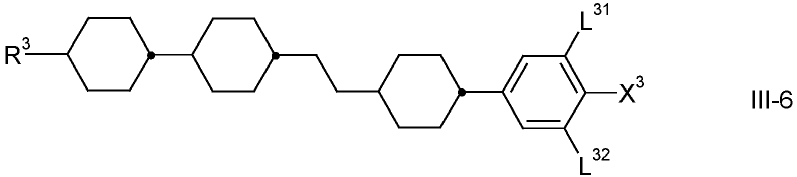 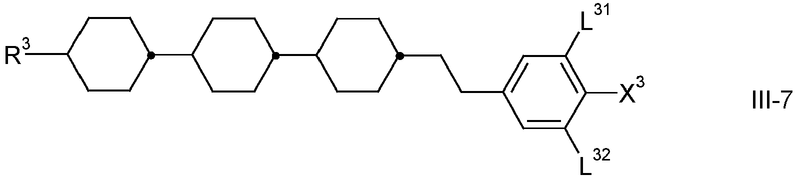 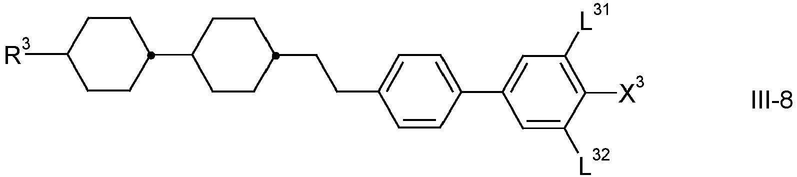 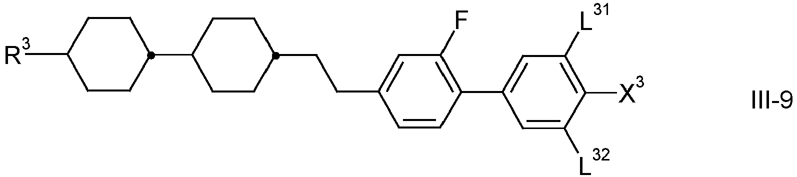 dans lesquelles
R³, L³¹ et L³² présentent les significations qui ont été indiquées selon la revendication 6 et
X³ représente F, Cl, alkyle halogéné ou alcoxy halogéné qui comporte jusqu'à 6 atomes de C.

9. Utilisation du milieu cristallin liquide selon une ou plusieurs des revendications 1 à 8 à des fins électro-optiques.

10. Utilisation selon la revendication 9 dans les modulateurs de lumière à cristaux liquides pour les dispositifs d'éclairage pour les véhicules à moteur ou dans les affichages à cristaux liquides.

11. Composant électro-optique contenant un milieu cristallin liquide selon une ou plusieurs des revendications 1 à 8.

12. Composant électro-optique selon la revendication 11, dans lequel le composant est un modulateur de lumière à cristaux liquides.

13. Dispositif d'éclairage pour les véhicules à moteur contenant un modulateur de lumière à cristaux liquides selon la revendication 12.

14. Affichage à cristaux liquides contenant un modulateur de lumière à cristaux liquides selon la revendication 12.
